(19) Europäisches Patentamt
European Patent Office
Office européen des brevets

(11) EP 0 742 388 B1

(12) EUROPEAN PATENT SPECIFICATION

(45) Date of publication and mention of the grant of the patent:
**06.09.2000 Bulletin 2000/36**

(51) Int Cl.[7]: **F16H 61/06**

(21) Application number: **96107400.2**

(22) Date of filing: **09.05.1996**

# (54) Control system for an automatic transmission

Steuerung für ein automatisches Getriebe

Système de commmande pour une transmission automatique

(84) Designated Contracting States:
**DE GB**

(30) Priority: **12.05.1995 JP 11501295**

(43) Date of publication of application:
**13.11.1996 Bulletin 1996/46**

(73) Proprietor: **AISIN AW CO., LTD.**
**Anjo-shi Aichi-ken (JP)**

(72) Inventors:
- **Tsutsui, Hiroshi**
  **Anjo-shi, Aichi-ken, 444-11 (JP)**
- **Yamamoto, Yoshihisa**
  **Anjo-shi, Aichi-ken, 444-11 (JP)**
- **Hayabuchi, Masahiro**
  **Anjo-shi, Aichi-ken, 444-11 (JP)**
- **Nishida, Masaaki**
  **Anjo-shi, Aichi-ken, 444-11 (JP)**

(74) Representative: **VOSSIUS & PARTNER**
**Siebertstrasse 4**
**81675 München (DE)**

(56) References cited:
**EP-A- 0 354 493**
**EP-A- 0 436 978**
**EP-A- 0 479 349**
**EP-A- 0 566 399**
**EP-A- 0 588 627**
**EP-A- 0 627 580**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 742 388 B1

## Description

The present invention relates to a control system for an automatic transmission and, more particularly, to a control system for an automatic transmission. which can prevent the misjudgment of the end of application and accordingly the occurrence of the application shock.

In the prior art, the automatic transmission is provided with a torque converter acting as a fluid transmission unit for receiving the rotation generated by an engine, and a speed change unit for changing the speed of the rotation transmitted from the torque converter. The speed change unit is equipped with a planetary gear unit composed of a plurality of gear elements, so that it may change the speed in accordance with the shift pattern which is set in advance in a manner to correspond to a vehicle speed and a throttle opening.

The automatic transmission is enabled to select a P (parking) range, an R (reverse) range, an N (neutral) range, a D (drive) range, a 3rd (third) range, a 2nd (second) range, a 1st (low) range. When the range is shifted from the N-range to the D-range by the shift lever, for example, there arises the creep phenomenon, in which the rotation of the engine in the idling state is transmitted through the torque converter to the speed change unit so that the vehicle moves forward little by little even if the accelerator pedal is not depressed.

Thus, there has been provided the following control system for an automatic transmission. While a range (as will be called the "forward running range") for the vehicle to run forward, such as the D-range, the 3rd range, the 2nd range or the 1st range is selected but the vehicle is substantially stopped, the aforementioned creep phenomenon is prevented by performing the neutral control to lower the oil pressure in the hydraulic servo of a first clutch thereby to bring the first clutch into a released state.

In the control system for an automatic transmission of the prior art described above, however, the oil pressure to be fed to the hydraulic servo is raised in gradual characteristics to apply the first clutch. As a result, if an abrupt fluctuation occurs in the input torque, for example, the first clutch may begin to slip.

It is, therefore, conceivable (as disclosed in JP-A-150557/1990 as the closest prior art) that the oil pressure to be fed to the hydraulic servo is gradually raised at first and is then abruptly raised when the gear ratio of a target gear stage is reached by the ratio (as will be called the "input/output RPM ratio") between the RPM at the input side (as will be called the "input RPM") and the RPM at the output side (as will be called the "output RPM") of a speed change unit.

In this case, when the input/output RPM ratio reaches the gear ratio of the target gear stage, the slippage of the first clutch has already disappeared to end its engagement. As a result, no application shock occurs even if the oil pressure is abruptly raised. In addition, the first clutch will not begin to slip even if an abrupt fluctuation occurs in the input torque.

Incidentally, when the vehicle in a neutral control is to be started, no problem occurs on a level road. On an uphill road, however, the vehicle may move backward to raise the following problem.

Generally speaking, an RPM sensor cannot detect the RPM by discriminating the forward and backward rotations. When the output RPM of the speed change unit is to be detected, it is detected for the forward rotation, even if actually in a backward run, so that the end of engagement is erroneously decided.

Fig. 2 is a time chart of a control system for an automatic transmission of the prior art on a level road, and Fig. 3 is a time chart of a control system for an automatic transmission of the prior art on an uphill road.

In these Figures: reference characters t1 designate a timing for starting the application; characters t2 a timing for ending the application; characters t3 a timing for apparently ending the application; characters $N_{C1}$ an input RPM; characters $N_o$ an output RPM; characters $N_{C1X}$ an input RPM (as will be called the "detected input RPM") detected by a not-shown input RPM sensor; and characters $N_{OX}$ an output RPM (as will be called the "detected output RPM") detected by the not-shown input RPM sensor.

When the vehicle is to be started on a level road, as illustrated in Fig. 2, the input/output RPM ratio reaches the gear ratio of a target gear stage if a value $N_O \cdot i$, as calculated by multiplying the output RPM $N_O$ and the gear ratio i of the not-shown speed change unit, is equal to the input RPM $N_{C1}$. Then, it is possible to decide the end of application.

On the other hand, when the vehicle is started on an uphill road, as shown in Fig. 3, the output RPM $N_o$ takes a negative value, and the value $N_O \cdot i$ or the product of the output RPM $N_O$ and the gear ratio i of the speed change unit also takes a negative value, as the vehicle moves backward. As the application advances, moreover, the input RPM $N_{C1}$ gradually drops to take a negative value, but the detected output RPM $N_{OX}$, a value $N_{OX} \cdot i$, as calculated by multiplying the detected output RPM $N_{OX}$ and the gear ratio i of the speed change unit, and the detected input RPM $N_{C1X}$ always take positive values.

Hence, at the timing t3, the value $N_{OX} \cdot i$ and the detected input RPM $N_{C1X}$ become equal so that the end of application is decided although the application is not ended as a matter of fact.

As a result, the oil pressure of the not-shown first clutch is abruptly raised so that the output torque highly fluctuates to cause the application shock in the vehicle.

The present invention has an object to solve the aforementioned problems of the control system for an automatic transmission of the prior art and to provide a control system for an automatic transmission. which can prevent the misjudgment of the end of application and accordingly the occurrence of the application shock.

The object is achieved by the features of claims 1 to 3.

The present invention will be described in detail in the following in connection with its embodiments with reference to the accompanying drawings.

Fig. 1 is a functional block diagram of a control system for an automatic transmission in a first embodiment of the present invention;
Fig. 2 is a time chart of a control system for an automatic transmission of the prior art on a level road;
Fig. 3 is a time chart of a control system for an automatic transmission of the prior art on an uphill road;
Fig. 4 is a schematic diagram of an automatic transmission in the first embodiment of the present invention;
Fig. 5 is a table enumerating the operations of the automatic transmission in the first embodiment of the present invention;
Fig. 6 is a hydraulic circuit diagram of an essential portion of a hydraulic control unit in the first embodiment of the present invention;
Fig. 7 is a main flow chart showing the operations of the control system for an automatic transmission in the first embodiment of the present invention;
Fig. 8 is a first time chart of the control system for an automatic transmission in the first embodiment of the present invention;
Fig. 9 is a second time chart of the control system for an automatic transmission in the first embodiment of the present invention;
Fig. 10 is a first diagram illustrating a sub-routine of a first clutch application control in the first embodiment of the present invention;
Fig. 11 is a second diagram illustrating a sub-routine of the first clutch application control in the first embodiment of the present invention;
Fig. 12 is a diagram illustrating a sweep-up pressure map in the first embodiment of the present invention;
Fig. 13 is a time chart of a control system for an automatic transmission in a second embodiment of the present invention;
Fig. 14 is a first diagram illustrating a sub-routine of a first clutch application control in the second embodiment of the present invention;
Fig. 15 is a second diagram illustrating a sub-routine of the first clutch application control in the second embodiment of the present invention;
Fig. 16 is a time chart of a control system for an automatic transmission in a third embodiment of the present invention;
Fig. 17 is a first diagram illustrating a sub-routine of a first clutch application control in the third embodiment of the present invention; and
Fig. 18 is a second diagram illustrating a sub-routine of the first clutch application control in the third embodiment of the present invention.

Fig. 1 is a functional block diagram of a control system for an automatic transmission in a first embodiment of the present invention.

In Fig. 1: reference numeral 10 designates an engine; numeral 12 a torque converter acting as a fluid transmission unit for transmitting the rotation of the engine 10 to a speed change unit 16; letter C a clutch adapted to be applied, when a forward running range is selected, for transmitting the rotation from the torque converter 12 to the not-shown transmission mechanism of the speed change unit 16; and characters C-1 a hydraulic servo.

Moreover: reference numeral 41 designates an automatic transmission control unit acting as a control system; numeral 47 an RPM sensor acting as input RPM detecting means for detecting an input RPM $N_{C1}$ of the speed change unit 16; numeral 50 a throttle opening sensor acting as throttle opening detecting means for detecting a throttle opening $\theta$ ; numeral 51 a vehicle speed sensor acting as output RPM detecting means for detecting an output RPM $N_O$ of the speed change unit 16; numeral 101 stop state detecting means for detecting the stop state of a vehicle, in which the forward running range is selected, in which the throttle opening $\theta$ is fully closed, in which the not-shown brake pedal is depressed and in which the vehicle speed is substantially zero; and numeral 102 hydraulic control means for controlling an oil pressure to be fed to the hydraulic servo C-1.

The automatic transmission control unit 41 is provided with: release means 103 for releasing the clutch C by lowering the oil pressure to be fed to the hydraulic servo C-1, when the stop state of the vehicle is detected by the stop state detecting means 101; and application means 104 for applying the clutch C by raising the oil pressure to be fed to the hydraulic servo C-1, when the stop state of the vehicle is detected by the stop state detecting means 101 while the clutch C is being released by the release means 103.

Moreover, the application means 104 is equipped with: gradual raising means 105 for gradually raising the oil pressure to be fed to the hydraulic servo C-1; application ending condition satisfaction deciding means 106 for deciding whether or not an application ending condition dictating the application end of the clutch C is satisfied, on the basis of the input RPM, the output RPM and the gear ratio of a target gear stage; and abrupt raising means 107 for abruptly raising the oil pressure to be fed to the hydraulic servo C-1, on the basis of the satisfaction of the application ending condition.

Moreover, the abrupt raising means 107 abruptly raises the oil pressure to be fed to the hydraulic servo C-1, when the application ending condition is satisfied if the throttle opening $\theta$ is not fully closed, and after a first set time has elapsed from the instant of satisfying the application ending condition if the throttle opening θ is fully closed.

Fig. 4 is a schematic diagram of the automatic transmission in a first embodiment of the present invention, and Fig. 5 is a table enumerating the operations of the automatic transmission in the first embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but transmits the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and righthand drive shafts 27 and 28 to the not-shown drive wheels.

The main transmission 18 is equipped with a first planetary gear unit 31 and a second planetary gear unit 32 and further with the first clutch clutch C1, a second clutch C2, a first brake B1, a second brake B2, a third brake B3 and one-way clutches F1 and F2 for transmitting the torque selectively between the individual elements of the two planetary gear units 31 and 32. The first clutch C1 functions as an input clutch for transmitting the rotation from the torque converter 12 to the transmission mechanism which is constructed of the remaining elements of the first main transmission 18 and the auxiliary transmission 19.

The first planetary gear unit 31 is composed of: a ring gear $R_1$ connected to a drive unit casing 34 through the third brake B3 and the one-way clutch F2 which are arranged in parallel with each other; a sun gear $S_1$ formed on a sun gear shaft 36 fitted on and rotatably supported by the output shaft 14; a carrier $CR_1$ connected to the counter drive gear 21; and pinions $P_{1A}$ and $P_{1B}$ meshing between the ring gear $R_1$ and the sun gear $S_1$ and rotatably supported by the carrier $CR_1$.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear $R_2$ connected through the first clutch C1 to the output shaft 14; a sun gear $S_2$ formed on the sun gear shaft 36 integrally with the sun gear $S_1$; a carrier $CR_2$ connected to the carrier $CR_1$; and a pinion $P_2$ meshing between the ring gear $R_2$ and the sun gear $S_2$, rotatably supported by the carrier $CR_2$ and formed integrally with the pinion $P_{1B}$.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear $R_3$ connected to the counter driven gear 22; a sun gear $S_3$ formed on a sun gear shaft 39 rotatably fitted on the output shaft 23; a carrier $CR_3$ fixed on the output shaft 23; and a pinion $P_3$ meshing between the ring gear $R_3$ and the sun gear $S_3$ and rotatably supported by the carrier $CR_3$.

Here will be described the operations of the automatic transmission having the construction thus far described.

Incidentally, in Fig. 5: characters C1 designate the first clutch, characters C2 the second clutch; characters C3 the third clutch; characters B1 the first brake; characters B2 the second brake; characters B3 the third brake; characters B4 the fourth brake; and characters Fl to F3 the one-way clutches. Moreover: letter R designates a reverse running range; letter N an N-range; letter D a D-range; characters 1ST a 1st-speed gear stage; characters 2ND a 2nd-speed gear stage; characters 3RD a 3rd-speed gear stage; and characters 4TH a 4th-speed gear stage.

Moreover, symbol ○ indicates that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first clutch C1, the second clutch C2, the third clutch C3, the first brake B1, the second brake B2, the third brake B3 and the fourth brake B4 are released, and that the one-way clutches F1 to F3 are free.

Incidentally, symbol (○) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear

$R_1$ is blocked by the one-way clutch F2 so that the rotation of the carrier $CR_2$ is drastically decelerated and transmitted to the counter driven gear 21 while rotating the sun gear $S_2$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$. The rotation of this ring gear $R_2$ is decelerated and transmitted to the carrier $CR_2$, because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$. The rotation of this ring gear $R_2$ is decelerated and transmitted to the carrier $CR_2$ because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

Moreover, the hydraulic control unit 40 is connected with the automatic transmission control unit (ECU) 41 so that it is operated according to the control program of the automatic transmission control unit 41.

With this automatic transmission control unit 41, on the other hand, there are individually connected a neutral start switch (N.S.S.W.) 45, an RPM sensor 47, a brake switch 48, the engine RPM sensor 49, a throttle opening sensor 50 and a vehicle speed sensor 51.

Moreover, the shift position of the not-shown shift lever, i.e., the selected range can be detected by the neutral start switch 45. The input RPM $N_{C1}$ can be detected by the RPM sensor 47.

Furthermore, whether or not the not-shown brake pedal is depressed can be detected by the brake switch 48. An engine RPM $N_E$ can be detected by the engine RPM sensor 49. The throttle opening $\theta$ can be detected by the throttle opening sensor 50. The output RPM $N_O$ of the speed change unit 16, i.e., the vehicle speed can be detected by the vehicle speed sensor 51.

Here will be described the hydraulic control unit 40.

Fig. 6 is a hydraulic circuit diagram of an essential portion of the hydraulic control unit in the first embodiment of the present invention.

As shown, a primary valve 59 regulates the oil pressure coming from the a pump 50 and outputs it as a line pressure to an oil line L-4. Moreover, a manual valve 55 is provided with ports 1, 2, 3, D, $P_L$ and R so that the line pressure, as outputted from the primary valve 59, is fed via the oil line L-4 to the port $P_L$. The manual valve 55 is connected to the not-shown shift lever, which is operated to output the line pressure as the 1st-range pressure, the 2nd-range pressure, 3rd-range pressure, the D-range pressure and the R-range pressure from the ports 1, 2, 3, D and R.

When the shift lever is placed in the D-range position, the oil under the D-range pressure, as generated in the port D, is fed to the individual hydraulic servos to apply the first clutch Cl (Fig. 4), the second clutch C2, the third clutch C3, the first brake B1, the second brake B2 and the third brake B3 selectively thereby establish one of the gear stages.

In this case, when a gear stage is set to correspond to the vehicle speed and the throttle opening $\theta$ so that its shift output is generated, the solenoid signals corresponding to the shift output are turned ON/OFF. When the solenoid valves are opened/closed in response to the ON/OFF of the solenoid signals, the not-shown 1-2 shift valve, 2-3 shift valve and 3-4 shift valve are switched.

Incidentally, a linear solenoid valve 66 is arranged for the neutral control. This linear solenoid valve 66 is controlled in response to the signal from the hydraulic control unit 40 (Fig. 4) so that it adjusts the oil pressure, as fed from the primary valve 59 via an oil line L-22, to generate a throttle pressure $P_{TH}$. Moreover, the linear solenoid valve 66 feed the throttle pressure $P_{TH}$ as a control oil pressure to a C-1 control valve 67 via an oil line L-13.

The C-1 control valve 67 is fed with the D-range pressure via an oil line L-3 so that it regulates the fed D-range pressure to the oil pressure of the hydraulic servo C-1 (as will be called the "C-1 oil pressure") $P_{C1}$ corresponding to the throttle pressure $P_{TH}$ from the linear solenoid valve 66 and feeds it to an oil line L-15.

With the oil line L-15, on the other hand, there is connected a neutral relay valve 64 which is connected to a hydraulic servo C-1 via an oil line L-17 and to a solenoid valve S3 via an oil line L-10. Moreover, the neutral relay valve 64 is connected with the oil line L-3 via an oil line L-18 so that it can feed the D-range pressure.

At the neutral control time, the solenoid valve S3 is turned ON so that the neutral relay valve 64 takes its upper half position. As a result, the C-1 oil pressure $P_{C1}$, as generated in the oil line L-15, is fed via the oil line L-17 to the hydraulic servo C1.

At the 1st to 4th speed times, on the other hand, the solenoid valve S3 is turned OFF so that the neutral relay valve 64 takes its lower half position. As a result, the oil under the D-range pressure is fed via the oil lines L-3 and L-18 and the neutral relay valve 64 and the oil line L-17 to the hydraulic servo C-1.

Here, the neutral relay valve 64, the linear solenoid valve 66, the C-1 control valve 67 and the hydraulic servo C-1 thus far described constitute the hydraulic control means 102 (Fig. 1).

Here will be described the operations of the control system for an automatic transmission thus constructed.

Fig. 7 is a main flow chart showing the operations of the control system for an automatic transmission in the embodiment of the present invention.

Step S1: It is decided whether or not the condition for starting the neutral control is satisfied. The routine advances to Step S2, if the starting condition is satisfied, but is ended if NOT.

If, in this case, all the following conditions are satisfied that the engine 10 (Fig. 4) is in the idling state, that the throttle opening θ is fully closed, that the not-shown brake pedal is depressed to turn ON the brake switch 48, that the forward running range is selected by the not-shown shift lever, that the vehicle speed detected by the vehicle speed sensor 51 is not higher than a set value but substantially zero, and that the vehicle substantially stops, it is decided that the starting condition holds.

Step S2: A solenoid signal (as will be called the "third solenoid signal") $S_3$ for opening/closing the solenoid valve S3 is turned ON. This third solenoid signal $S_3$ is outputted as a change-over signal from the automatic transmission control unit 41.

Step S3: The release means 103 (Fig. 1) outputs a signal SLT to the linear solenoid valve 66 (Fig. 6) to set the C-1 oil pressure $P_{C1}$ to $P_{C1N}$. In this case, there is executed the first clutch releasing operation in which the C-1 oil pressure $P_{C1}$ is gradually lowered to effect the sweep-down, followed by the in-neutral operation in which the pressure lowering/raising are repeated to hold the released state of the first clutch C1.

Step S4: The satisfaction of the condition for ending the neutral control is awaited.

In this case, it is decided that the ending condition is satisfied, if any of the following conditions is satisfied: that the engine 10 is not in the idling state; that the throttle opening θ is not fully closed; that the brake switch 48 is OFF; that the forward running range is not selected; and that the vehicle speed is not substantially zero.

Step S5: The application means 104 controls the application of the first clutch.

Here will be described the sub-routine of the first clutch application control of Step S5 of Fig. 7.

Fig. 8 is a first time chart of the control system for an automatic transmission in the first embodiment of the present invention; Fig. 9 is a second time chart of the control system for an automatic transmission in the first embodiment of the present invention; Fig. 10 is a first diagram illustrating a sub-routine of a first clutch application control in the first embodiment of the present invention; Fig. 11 is a second diagram illustrating a subroutine of the first clutch application control in the first embodiment of the present invention; and Fig. 12 is a diagram illustrating a sweep-up pressure map in the first embodiment of the present invention. Incidentally, the abscissa of Fig. 12 indicates the engine RPM $N_E$, and the ordinate indicates a sweep-up pressure $\Delta P_{C1}$.

In Figs. 8 and 9: reference letters ta designate a timing for starting the application of the first clutch C1; letters tb a timing for ending the application; letters tc a timing for the satisfaction of the ending condition of the neutral control; letters td a timing for the satisfaction of the application ending condition dictating the application end of the first clutch C1 (Fig. 4); characters $N_O$ the output RPM; characters $N_{C1X}$ a detected input RPM detected by the RPM sensor 47; and characters $N_{OX}$ a detected output RPM detected by the vehicle speed sensor 51.

Moreover: characters $P_{C1}$ designate the C-1 oil pressure to be fed to the hydraulic servo C-1 (Fig. 6); characters $P_{C1N}$ the level of the C-1 oil pressure $P_{C1}$ immediately before the application of the first clutch C1; characters $P_{C1S}$ a constant as a shelf pressure; characters N1 a set value; and characters $T_{IDLE}$ and $T_{NOT\ IDLE}$ set times.

In the present embodiment, the C-1 oil pressure $P_{C1}$ is set to the value $P_{C1N}$ if the ending condition of the neutral control is satisfied at the timing tc. At the timing ta, moreover, the application of the first clutch C1 is started to raise the C-1 oil pressure $P_{C1}$ gradually to effect the sweep-up. In accordance with this, the input RPM $N_{C1}$ drops, but the output RPM $N_O$ rises.

If the throttle opening θ is fully closed at the timing ta, the decision of the application end may be mistaken as the vehicles moves backward. First of all, therefore, the C-1 oil pressure $P_{C1}$ is gradually raised to decide whether or not the preset application ending condition is satisfied. If this application ending condition is satisfied at the timing td, the C-1 oil pressure $P_{C1}$ is abruptly raised when the set time $T_{IDLE}$, as set as the first set time, elapses from the timing td. As a result, the C-1 oil pressure $P_{C1}$ is prevented from being abruptly raised in the course of the engagement of the first clutch C1, so that the application shock can be prevented from occurring.

In this case, the throttle opening θ is fully closed so that the input torque to the speed change unit 16 hardly fluctuates. Even with a delay in the decision of the application end, therefore, the first clutch C1 does not slip.

On the other hand, if the throttle opening θ is not fully closed at the timing ta, that is, if the not-shown accelerator pedal is depressed, a relative high torque is transmitted to the speed change unit 16 as the engagement of the first clutch C1 starts, so that the output torque of the vehicle increases. Thus, even if the vehicle is moving backward at the instant of applying the first clutch C1, the output torque acts to prevent the backward movement of the vehicle quickly. As a result, the decision of the application end is not mistaken by the backward movement of the vehicle.

If, therefore, the throttle opening θ is not fully closed at the timing ta, the C-1 oil pressure $P_{C1}$ is gradually raised at first, and it is decided whether or not the preset application ending condition is satisfied. If this application ending condition is satisfied at the timing td, the C-1 oil pressure $P_{C1}$ is abruptly raised.

In the present embodiment, as shown in Fig. 9, the application end of the first clutch C1 is decided at the timing tb before which the set time $T_{NOT\ IDLE}$ has elapsed from the timing td satisfying the application ending condition.

Moreover, the application ending condition is satisfied if the detected input RPM $N_{C1X}$ is smaller than the sum of the product $N_{OX} \cdot i$ of the detected output RPM $N_{OX}$ and and the gear ratio i of the speed change unit 16 and the set value N1, as follows:

$$N_{C1X} < N_{OX} \cdot i + N_1.$$

Hence, the application ending condition is satisfied if the first clutch C1 calculatively comes into a state immediately before the end of its application.

As a result, the first clutch C1 does not slip even if the input torque to the speed change unit 16 fluctuates with the depression of the accelerator pedal.

Thus, the first clutch C1 will never slip even if the input torque to the speed change unit 16 fluctuates, so that the decision of the application end cannot be mistaken to prevent the application shock.

Here will be described the flow chart.

Step S5-1: The input RPM $N_{C1}$ at the timing tc for the satisfaction of the ending condition of the neutral control is set to the initial RPM $N_{C1S}$.

Step S5-2: A flag FB is set to 0.

Step S5-3: The constant $P_{C1S}$ is added to the value $P_{C1N}$, and the resultant sum is set to the C-1 oil pressure $P_{C1}$.

Step S5-4: It is decided whether or not the input RPM $N_{C1}$ is smaller than the difference of the initial RPM $N_{C1S}$ from a constant DSN. In other words, it is decided whether or not the engagement of the first clutch C1 has been started. The routine advances to Step S5-5, if the input RPM $N_{C1}$ is smaller than the difference of the initial RPM $N_{C1S}$ from the constant DSN, but returns to Step S5-3 if the input RPM $N_{C1}$ is more than the difference of the initial RPM $N_{C1S}$ from the constant DSN.

Step S5-5: It is decided whether or not the throttle opening θ is in the fully closed state (IDL). The routine advances to Step S5-6, if the throttle opening θ is fully closed, but to Step S5-7 if not fully closed.

Step S5-6: The flag FA is set to an idle ON state (0).

Step S5-7: The flag FA is set to an idle OFF state (1).

Step S5-8: The gradual raising means 105 (Fig. 1) raises the C-1 oil pressure $P_{C1}$. Specifically, with reference to the sweep-up pressure map of Fig. 12, the sweep-up pressure $\Delta P_{C1}$ is added to the C-1 oil pressure $P_{C1}$, and the resultant sum is set as the C-1 oil pressure $P_{C1}$. By repeating this Step S5-8, the C-1 oil pressure $P_{C1}$ can be gradually raised.

Step S5-9: It is decided whether or not the flag FB is 0. The routine advances to Step S5-10, if the flag FB is 0, but to Step S5-13 if the flag FB is not 0.

Step S5-10: The application ending condition satisfaction deciding means 106 decides whether or not the application ending condition is satisfied, on the basis of the detected output RPM $N_{OX}$. In this case, the RPM at the output side of the first clutch C1 is estimated to be the product $N_{OX} \cdot i$ which is calculated by multiplying the detected output RPM $N_{OX}$ by the gear ratio i of the speed change unit 16. Hence, the application ending condition is whether or not the detected input RPM $N_{C1X}$ is smaller than the sum of the value $N_{OX} \cdot i$ and the set value N1, as follows:

$$N_{C1X} < N_{OX} \cdot i + N1.$$

If the detected input RPM $N_{C1X}$ is smaller than the sum of the value $N_{OX} \cdot i$ and the set value N1, the application ending condition is satisfied at the timing td. Hence, it is decided that the engagement of the first clutch C1 has been ended, and the routine advances to Step S5-11. If the detected input RPM $N_{C1X}$ is larger than the sum of the value $N_{OX} \cdot i$ and the set value N1, the routine returns to Step S5-5.

Step S5-11: The flag FB is set to 1.

Step S5-12: The time T1, as measured by the not-shown timer packaged in the automatic transmission control unit 41, is set to 0.

Step S5-13: It is decided whether or not the flag FA is in the idle ON state. The routine advances to Step S5-14, if the flag FA is in the idle ON state, and to Step S5-15 if the flag FA is not in the idle ON state.

Step S5-14: It is decided whether or not the time T1 measured by the timer is longer than the set time $T_{IDLE}$ of the case in which the flag FA is in the idle ON state. The routine advances to Step S5-16, if the time T1 is longer than the set time $T_{IDLE}$, but returns to Step S5-5 if the set time T1 is shorter than the set time $T_{IDLE}$. In this case, the set time $T_{IDLE}$ is set to such a large value, e.g., 0.4 [secs] that the engagement of the first clutch C1 is ended without fail.

Step S5-15: It is decided whether or not the time T1 by the timer is longer than the set time $T_{NOT\ IDLE}$ of the case in which the flag FA is not in the idle ON state. The routine advances to Step S5-16, if the time T1 is longer than the set time $T_{NOT\ IDLE}$, but returns to Step S5-5 if the time T1 is shorter than the set time $T_{NOT\ IDLE}$. In this case, the set time $T_{NOT\ IDLE}$ is set as short as 0.05 [secs], and is made to correspond to the time period necessary for equalizing the detected input RPM $N_{C1X}$ and the value $N_{OX} \cdot i$ after the following relation has been satisfied, because the detected input RPM $N_{C1X}$ is compared at Step S5-11 with the sum of the value $N_{OX} \cdot i$ and the set value N1:

$$N_{C1X} < N_{OX} \cdot i + N1.$$

If, moreover, the instant at which the detected input RPM $N_{C1X}$ and the value $N_{OX} \cdot i$ become equal is detected at Step S5-11, it is unnecessary for awaiting the lapse of the set time $T_{NOT\ IDLE}$. Generally speaking, however, the RPM cannot be accurately detected at all times due to the various errors. This may make it impossible to detect the equalization of the detected input RPM $N_{C1X}$ and the value $N_{OX} \cdot i$. Thus, the set value N1 and the set time $T_{NOT\ IDLE}$ are set to decide the application end of the first clutch C1. If the flag FA is not in the idle ON state at Step S5-13, the routine advances to Step S5-16 not via Step S5-14.

Step S5-16: The abrupt raising means 107 ends the abrupt rise by turning OFF the third solenoid signal $S_3$ for turning ON/OFF the solenoid valve S3, and raises the C-1 oil pressure $P_{C1}$ abruptly.

Here will be described a second embodiment of the present invention.

Fig. 13 is a time chart of a control system for an automatic transmission in a second embodiment of the present invention; Fig. 14 is a first diagram illustrating a sub-routine of a first clutch application control in the second embodiment of the present invention; and Fig. 15 is a second diagram illustrating a sub-routine of the first clutch application control in the second embodiment of the present invention.

In Fig. 13: reference letters ta designate a timing for starting the application; letters tb a timing for ending the application; letters tc a timing for the satisfaction of ending condition of the neutral control; letters td a timing for the satisfaction of the application ending condition; letters te a timing for the satisfaction of the application standby condition; characters $N_O$ the output RPM; characters $N_{C1X}$ a detected input RPM detected by the RPM sensor 47 (Fig. 4); and characters $N_{OX}$ a detected output RPM detected by the vehicle speed sensor 51.

Moreover: characters $P_{C1}$ designate the C-1 oil pressure to be fed to the hydraulic servo C-1; characters $P_{C1N}$ the level of the C-1 oil pressure $P_{C1}$ immediately before the application of the first clutch C1; characters $P_{C1S}$ a constant as a shelf pressure; characters N1 a set value; and characters $T_{IDLE}$ and $T_{OFF}$ set time. Incidentally, the set time $T_{OFF}$ is set as a first set time.

In the present embodiment, the C-1 oil pressure $P_{C1}$ is set to the value $P_{C1N}$ if the ending condition of the neutral control is satisfied at the timing tc. At the timing ta, moreover, the application of the first clutch C1 is started to raise the C-1 oil pressure $P_{C1}$ gradually to effect the sweep-up. In accordance with this, the input RPM $N_{C1}$ drops, but the output RPM $N_O$ rises.

Here, if the throttle opening θ is not fully closed at the timing ta, that is, if the not-shown accelerator pedal is depressed, a relative high torque is transmitted to the speed change unit 16 as the engagement of the first clutch C1 starts, so that the output torque of the vehicle increases. Thus, even if the vehicle is moving backward at the instant of applying the first clutch C1, the output torque acts to prevent the backward movement of the vehicle quickly. As a result, the decision of the application end is not mistaken by the backward movement of the vehicle.

If, therefore, the throttle opening θ is not fully closed at the timing ta, the C-1 oil pressure $P_{C1}$ is gradually raised at first, as in Fig. 9, and it is decided whether or not the preset application ending condition is satisfied. If this application ending condition is satisfied at the timing td, the C-1 oil pressure $P_{C1}$ is abruptly raised when the set time $T_{NOT\ IDLE}$ has elapses from the timing td.

Incidentally, the C-1 oil pressure $P_{C1}$ can also be abruptly raised at the instant of satisfying the application ending condition, i.e., at the timing td.

Moreover, the application ending condition is satisfied if the detected input RPM $N_{C1X}$ is smaller than the sum of the value $N_{OX}\cdot$ i and the set value N1, as follows:

$$N_{C1X} < N_{OX} \cdot i + N1$$

Hence, the application ending condition is satisfied if the first clutch C1 calculatively comes into a state immediately before the end of its application.

As a result, the first clutch C1 does not slip even if the input torque to the speed change unit 16 fluctuates with the depression of the accelerator pedal.

If the throttle opening θ is fully closed, on the other hand, the decision of the application end may be mistaken as the vehicles moves backward. As shown in Fig. 13, therefore, it is decided whether or not the application ending condition is dissatisfied and whether or not the application standby condition is satisfied, by the time the set time $T_{OFF}$ elapses after the application ending condition has been satisfied, . In this case, the application standby condition is whether or not the detected input RPM $N_{C1X}$ is smaller than the difference of the value $N_{OX} \cdot$ i from the set value N1, as follows:

$$N_{C1X} < N_{OX} \cdot i - N1.$$

Hence, the application ending condition is satisfied if the first clutch C1 calculatively comes into a state immediately after the start of its release after its application has been ended.

If, moreover, the application standby condition is satisfied till the set time $T_{OFF}$ elapses, it is found that the vehicle is moving backward. Hence, the C-1 oil pressure $P_{C1}$ is abruptly raised when the set time $T_{IDLE}$ or the second set time elapses after the application ending condition has been satisfied. This makes it possible to prevent the C-1 oil pressure $P_{C1}$ from being abruptly raised in the course of application and accordingly the application shock from occurring in the first clutch C1.

On the other hand, the set time $T_{OFF}$ or the first set time is set to a time period for which the first clutch C1 calculatively comes into a state immediately after the start of its release after it has come into a state immediately before the end of its application, and the set time $T_{IDLE}$ or the second set time is set to that by which the application of the first clutch C1 is ended.

If, moreover, the application standby condition is not satisfied till the set time $T_{OFF}$ elapses, it is found that the vehicle is not moving backward. Hence, the C-1 oil pressure $P_{C1}$ is abruptly raised when the set time $T_{OFF}$ elapses. This makes it possible to prevent the rise in the C-1 oil pressure $P_{C1}$ from being delayed more than necessary.

Thus, the first clutch C1 will never slip even if the input torque to the speed change unit 16 fluctuates, so that the decision of the application end cannot be mistaken to prevent the application shock.

Here will be described the flow chart.

Step S5-21: The input RPM $N_{C1}$ at the timing tc for the satisfaction of the ending condition of the neutral control is set to the initial RPM $N_{C1S}$.

Step S5-22: Flags FB and FC are set to 0.

Step S5-23: The constant $P_{C1S}$ is added to the value $P_{C1N}$, and the resultant sum is set to the C-1 oil pressure $P_{C1}$.

Step S5-24: It is decided whether or not the input RPM $N_{C1}$ is smaller than the difference of the initial RPM $N_{C1S}$ from a constant DSN. The routine advances to Step S5-25, if the input RPM $N_{C1}$ is smaller than the difference of the initial RPM $N_{C1S}$ from the constant DSN, but returns to Step S5-23 if the input RPM $N_{C1}$ is more than the difference of the initial RPM $N_{C1S}$ from the constant DSN.

Step S5-25: It is decided whether or not the throttle opening θ is in the fully closed state (IDL). The routine advances to Step S5-26, if the throttle opening θ is fully closed, but to Step S5-27 if not fully closed.

Step S5-26: The flag FA is set to an idle ON state (0).

Step S5-27: The flag FA is set to an idle OFF state (1).

Step S5-28: The gradual raising means 105 (Fig. 1) raises the C-1 oil pressure $P_{C1}$. Specifically, the sweep-up pressure $\Delta P_{C1}$ is added to the C-1 oil pressure $P_{C1}$, and the resultant sum is set as the C-1 oil pressure $P_{C1}$. By repeating this Step S5-28, the C-1 oil pressure $P_{C1}$ can be gradually raised.

Step S5-29: It is decided whether or not the flag FB is 0. The routine advances to Step S5-30, if the flag FB is 0, but to Step S5-33 if the flag FB is not 0.

Step S5-30: The application ending condition satisfaction deciding means 106 decides whether or not the application ending condition is satisfied, on the basis of the detected output RPM $N_{OX}$. In this case, the application ending condition is whether or not the detected input RPM $N_{C1X}$ is smaller than the sum of the value $N_{OX} \cdot$ i and the set value N1, as follows:

$$N_{C1X} < N_{OX} \cdot i + N1.$$

If the detected input RPM $N_{C1X}$ is smaller than the sum of the value $N_{OX} \cdot$ i and the set value N1, the application ending condition is satisfied at the timing td. Hence, it is decided that the engagement of the first clutch C1 has been ended, and the routine advances to Step S5-31. If the detected input RPM $N_{C1X}$ is larger than the sum of the value $N_{OX} \cdot$ i and the set value N1, the routine returns to Step S5-25.

Step S5-31: The flag FB is set to 1.

Step S5-32: The time T1, as measured by the not-shown timer packaged in the automatic transmission control unit 41, is set to 0.

Step S5-33: It is decided whether or not the flag FA is in the idle ON state. The routine advances to Step S5-34, if the flag FA is in the idle ON state, and to Step S5-35 if the flag FA is not in the idle ON state.

Step S5-34: It is decided whether or not the time T1 measured by the timer is longer than the set time $T_{OFF}$. The routine advances to Step S5-36, if the time T1 is longer than the set time $T_{OFF}$, but to Step S5-37 if the time T1 is shorter than the set time $T_{OFF}$. In this case, the set time $T_{OFF}$ is set to twice as long as the set time $T_{NOT\ IDLE}$, such as 0.1 [secs]. Here, the set time $T_{OFF}$ is set to correspond to the time period after the following relation has been satisfied at Step S5-30:

$$N_{C1X} < N_{OX} \cdot i + N1$$

and before the following relation is satisfied at Step S5-38:

$$N_{C1X} < N_{OX} \cdot i - N1.$$

Step S5-35: It is decided whether or not the time T1 by the timer is longer than the set time $T_{NOT\ IDLE}$ of the case in which the flag FA is not in the idle ON state. The routine advances to Step S5-36, if the time T1 is longer than the set time $T_{NOT\ IDLE}$, but returns to Step S5-25 if the time T1 is shorter than the set time $T_{NOT\ IDLE}$. In this case, the set time $T_{NOT\ IDLE}$ is set as short as 0.05 [secs]. If, therefore, the flag FA is not in the idle ON state at Step S5-33, the routine can also advance to the Step S5-36 not via Step S5-35.

Step S5-36: It is decided whether or not the flag FC is 0. The routine advances to Step S5-41, if the flag FC is 0, and to Step S5-40 if the flag FC is not 0.

Step S5-37: It is decided whether or not the flag FC is 0. The routine advances to Step S5-38, if the flag FC is 0, and to Step S5-40 if the flag FC is not 0.

Step S5-38: The not-shown application standby condition satisfaction deciding means decides whether or not the application standby condition is satisfied, on the basis of the detected output RPM $N_{OX}$. In this case, the application standby condition is whether or not the detected input RPM $N_{C1X}$ is smaller than the difference of the value $N_{OX} \cdot i$ from the set value N1, as follows:

$$N_{C1X} < N_{OX} \cdot i - N1.$$

If the detected input RPM $N_{C1X}$ is smaller than the difference of the value $N_{OX} \cdot i$ from the set value N1, the application standby condition is satisfied at the timing te. Hence, it is decided that the engagement of the first clutch C1 is ended, and the routine advances to Step S5-39. If the detected input RPM $N_{C1X}$ is larger than the difference of the value $N_{OX} \cdot i$ from the set value N1, the routine returns to Step S5-25. Here will be described the application standby condition. The engagement of the first clutch C1 is not actually ended, but the backward movement of the vehicle invites the misjudgment, although the application end of the first clutch C1 has been confirmed by the satisfaction of the following relation at Step S5-30:

$$N_{C1X} < N_{OX} \cdot i + N1,$$

but if the following relation is satisfied:

$$N_{C1X} < N_{OX} \cdot i - N1.$$

Thus, the backward movement of the vehicle can be detected by the application standby condition.

Step S5-39: The flag FC is set to 1.

Step S5-40: It is decided whether or not the time T1 measured by the timer is longer than the set time $T_{IDLE}$. The routine advances to Step S5-41, if the time T1 is longer than the set time $T_{IDLE}$, but returns to Step S5-25 if the time T1 is shorter than the set time $T_{IDLE}$. In this case, the set time $T_{IDLE}$ is set as long as 0.4 [secs].

Step S5-41: The abrupt raising means 107 turns OFF the third solenoid signal $S_3$ for opening/closing the solenoid valve S3.

Here will be described a third embodiment of the present invention.

Fig. 16 is a time chart of a control system for an automatic transmission in a third embodiment of the present invention; Fig. 17 is first diagram illustrating a sub-routine of a first clutch application control in the third embodiment of the present invention; and Fig. 18 is a second diagram illustrating a sub-routine of the first clutch application control in the third embodiment of the present invention.

In Fig. 16: reference letters ta designate a timing for starting the application; letters tb a timing for ending the application; letters tc a timing for the satisfaction of ending condition of the neutral control; letters td a timing for the satisfaction of the first application ending condition; letters te a timing for the satisfaction of the application standby condition; letters tf a timing for the satisfaction of a second application ending condition; characters $N_O$ the output RPM; characters $N_{C1X}$ a detected input RPM detected by the RPM sensor 47 (Fig. 4); and characters $N_{OX}$ a detected output RPM detected by the vehicle speed sensor 51.

Moreover: characters $P_{C1}$ designate the C-1 oil pressure to be fed to the hydraulic servo C-1; characters $P_{C1N}$ the level of the C-1 oil pressure $P_{C1}$ immediately before the application of the first clutch C1; characters $P_{C1S}$ a constant as a shelf pressure; characters N1 a set value; and characters $T_{IDLE}$ and $T_{OFF}$ set time. In the present embodiment, the set time $T_{OFF}$ is set as a first set time, and the set time $T_{OFFG}$ is set as a second set time.

In the present embodiment, the C-1 oil pressure $P_{C1}$ is set to the value $P_{C1N}$ if the ending condition of the neutral control is satisfied at the timing tc. At the timing ta, moreover, the application of the first clutch C1 is started to raise the C-1 oil pressure $P_{C1}$ gradually to effect the sweep-up. In accordance with this, the input RPM $N_{C1}$ drops, but the output RPM $N_O$ rises.

Subsequently, if the first application ending condition is satisfied at the timing td, it is decided whether or not the application standby condition is satisfied by the time the set time $T_{OFF}$ elapses. If the application standby condition is satisfied at the timing te, the satisfaction of the second application ending condition is awaited.

Next, if the second application ending condition is satisfied at the timing tf, the C-1 oil pressure $P_{C1}$ is abruptly raised when the set time $T_{OFFG}$ elapses. If the application standby condition is not satisfied at the timing te, the C-1 oil pressure $P_{C1}$ is abruptly raised when the set time $T_{OFF}$ elapses.

Here, if the throttle opening θ is not fully closed at the timing ta, that is, if the not-shown accelerator pedal is depressed, a relative high torque is transmitted to the speed change unit 16 as the engagement of the first clutch C1 starts, so that the output torque of the vehicle increases. Thus, even if the vehicle is moving backward at the instant of applying the first clutch C1, the output torque acts to prevent the backward movement of the vehicle quickly. As a result, the decision of the application end is not mistaken by the backward movement of the vehicle.

If, therefore, the throttle opening θ is not fully closed at the timing ta, the C-1 oil pressure $P_{C1}$ is gradually raised at first, as in Fig. 9, and it is decided whether or not the preset first application ending condition is satisfied. If the first application ending condition is satisfied at the timing td, the C-1 oil pressure $P_{C1}$ is abruptly raised.

In the present embodiment, the application end of the first clutch C1 is decided when the set time $T_{NOT\ IDLE}$ elapses from the timing td of the satisfaction of the first application ending condition.

Moreover, the first application ending condition is satisfied if the detected input RPM $N_{C1X}$ is smaller than the sum of the value $N_{OX} \cdot i$ and the set value N1, as follows:

$$N_{C1X} < N_{OX} \cdot i + N1.$$

Hence, the first application ending condition is satisfied if the first clutch C1 calculatively comes into a state immediately before the end of its application.

As a result, the first clutch C1 does not slip even if the input torque to the speed change unit 16 fluctuates with the depression of the accelerator pedal.

If the throttle opening θ is fully closed, on the other hand, the decision of the application end may be mistaken as the vehicles moves backward. As shown in Fig. 16, therefore, it is decided whether or not the application standby condition is satisfied, by the time the set time $T_{OFF}$ elapses after the first application ending condition has been satisfied. In this case, the application standby condition is whether or not the detected input RPM $N_{C1X}$ is smaller than the difference of the value $N_{OX} \cdot i$ from the set value N1, as follows:

$$N_{C1X} < N_{OX} \cdot i - N1.$$

Hence, the application standby condition is satisfied if the first clutch C1 calculatively comes into a state immediately after the start of its release after its application has been ended.

If, moreover, the application standby condition is satisfied at the timing te till the set time $T_{OFF}$ elapses, it is found that the vehicle is moving backward. In this case, the following relation never fails to hold, and then the first clutch C1 is actually applied:

$$N_{C1X} > N_{OX} \cdot i - N1.$$

It follows that the second application ending condition is whether or not the detected input RPM $N_{C1X}$ is larger than the difference of the value $N_{OX} \cdot i$ from the set value N1.

Hence, the second application ending condition is satisfied if the first clutch C1 calculatively comes again into a state immediately before the end of its application after the first application ending condition has been satisfied.

The C-1 oil pressure $P_{C1}$ is abruptly raised when the set time $T_{OFFG}$ elapses after the second application ending condition has been satisfied. This makes it possible to prevent the C-1 oil pressure $P_{C1}$ from being abruptly raised in the course of application and accordingly the application shock from occurring in the first clutch C1.

On the other hand, the set time $T_{OFF}$ or the first set time is set to that which is calculatively required for the first clutch C1 to come into a state immediately after the start of its release after it has come into a state immediately before the end of its application, and the set time $T_{OFFG}$ is set to that which is required for the first clutch C1 to come into a state of its complete application after it has come into a state immediately before the end of its application.

If, moreover, the application standby condition is not satisfied till the set time $T_{OFF}$ elapses, it is found that the vehicle is not moving backward. Hence, the C-1 oil pressure $P_{C1}$ is abruptly raised when the set time

$T_{OFF}$ elapses. This makes it possible to prevent the rise in the C-1 oil pressure $P_{C1}$ from being delayed more than necessary.

Thus, the first clutch C1 will never slip even if the input torque to the speed change unit 16 fluctuates, so that the decision of the application end cannot be mistaken to prevent the application shock.

Here will be described the flow chart.

Step S5-51: The input RPM $N_{C1}$ at the timing tc for the satisfaction of the ending condition of the neutral control is set to the initial RPM $N_{C1S}$.

Step S5-52: Flags FB, FC and FD are set to 0.

Step S5-53: The constant $P_{C1S}$ is added to the value $P_{C1N}$, and the resultant sum is set to the C-1 oil pressure $P_{C1}$.

Step S5-54: It is decided whether or not the input RPM $N_{C1}$ is smaller than the difference of the initial RPM $N_{C1S}$ from a constant DSN. The routine advances to Step S5-55, if the input RPM $N_{C1}$ is smaller than the difference of the initial RPM $N_{C1S}$ from the constant DSN, but returns to Step S5-53 if the input RPM $N_{C1}$ is more than the difference of the initial RPM $N_{C1S}$ from the constant DSN.

Step S5-55: It is decided whether or not the throttle opening θ is in the fully closed state (IDL). The routine advances to Step S5-56, if the throttle opening θ is fully closed, but to Step S5-57 if not fully closed.

Step S5-56: The flag FA is set to an idle ON state (0).

Step S5-57: The flag FA is set to an idle OFF state (1).

Step S5-58: The gradual raising means 105 (Fig. 1) raises the C-1 oil pressure $P_{C1}$. Specifically, the sweep-up pressure $\Delta P_{C1}$ is added to the C-1 oil pressure $P_{C1}$, and the resultant sum is set as the C-1 oil pressure $P_{C1}$. By repeating this Step S5-58, the C-1 oil pressure $P_{C1}$ can be gradually raised.

Step S5-59: It is decided whether or not the flag FB is 0. The routine advances to Step S5-60, if the flag FB is 0, but to Step S5-63 if the flag FB is not 0.

Step S5-60: The not-shown first application ending condition satisfaction deciding means decides whether or not the first application ending condition is satisfied, on the basis of the detected output RPM Nox. In this case, the first application ending condition is whether or not the detected input RPM $N_{C1X}$ is smaller than the sum of the value $N_{OX} \cdot i$ and the set value N1, as follows:

$$N_{C1X} < N_{OX} \cdot i + N1.$$

If the detected input RPM $N_{C1X}$ is smaller than the sum of the value $N_{OX} \cdot i$ and the set value N1, the first application ending condition is satisfied at the timing td. Hence, it is decided that the engagement of the first clutch C1 has been ended, and the routine advances to Step S5-61. If the detected input RPM $N_{C1X}$ is larger than the sum of the value $N_{OX} \cdot i$ and the set value N1, the routine returns to Step S5-55.

Step S5-61: The flag FB is set to 1.

Step S5-62: The time T1, as measured by the not-shown timer packaged in the automatic transmission control unit 41, is set to 0.

Step S5-63: It is decided whether or not the flag FA is in the idle ON state. The routine advances to Step S5-64, if the flag FA is in the idle ON state, and to Step S5-65 if the flag FA is not in the idle ON state.

Step S5-64: It is decided whether or not the time T1 measured by the timer is longer than the set time $T_{OFF}$. The routine advances to Step S5-66, if the time T1 is longer than the set time $T_{OFF}$, but to Step S5-67 if the time T1 is shorter than the set time $T_{OFF}$. In this case, the set time $T_{OFF}$ is set to 0.1 [secs], for example.

Step S5-65: It is decided whether or not the time T1 by the timer is longer than the set time $T_{NOT\ IDLE}$ of the case in which the flag FA is not in the idle ON state. The routine advances to Step S5-66, if the time T1 is longer than the set time $T_{NOT\ IDLE}$, but returns to Step S5-55 if the time T1 is shorter than the set time $T_{NOT\ IDLE}$. In this case, the set time $T_{NOT\ IDLE}$ is set as short as 0.05 [secs]. If, therefore, the flag FA is not in the idle ON state at Step S5-63, the routine can also advance to the Step S5-66 not via Step S5-65.

Step S5-66: It is decided whether or not the flag FC is 0. The routine advances to Step S5-75, if the flag FC is 0, and to Step S5-69 if the flag FC is not 0.

Step S5-67: It is decided whether or not the flag FC is 0. The routine advances to Step S5-68, if the flag FC is 0, and to Step S5-69 if the flag FC is not 0.

Step S5-68: The not-shown application standby condition satisfaction deciding means decides whether or not the application standby condition is satisfied, on the basis of the detected output RPM $N_{OX}$. In this case, the application standby condition is whether or not the detected input RPM $N_{C1X}$ is smaller than the difference of the value $N_{OX} \cdot i$ from the set value N1, as follows:

$$N_{C1X} < N_{OX} \cdot i - N1.$$

If the detected input RPM $N_{C1X}$ is smaller than the difference of the value $N_{OX} \cdot i$ from the set value N1, the application standby condition is satisfied at the timing te. Hence, the routine advances to Step S5-69. If the detected input RPM $N_{C1X}$ is larger than the difference of the value $N_{OX} \cdot i$ from the set value N1, the routine returns to Step S5-55.

Step S5-69: The flag FC is set to 1.

Step S5-70: It is decided whether or not the flag FD is 0. The routine advances to Step S5-71, if the flag FD is 0, and to Step S5-74 if the flag FD is not 0.

Step S5-71: The not-shown second application ending condition satisfaction deciding means decides whether or not the second application ending condition is satisfied, on the basis of the detected output RPM $N_{OX}$. In this case, the second application standby condition is whether or not the detected input RPM $N_{C1X}$ is larger than the difference of the value $N_{OX} \cdot i$ from the set value N1, as follows:

$$N_{C1X} > N_{OX} \cdot i - N1.$$

The routine advances to Step S5-72, if the detected input RPM $N_{C1X}$ is larger than the difference of the value $N_{OX} \cdot i$ from the set value N1, but returns to Step S5-55 if the detected input RPM $N_{C1X}$ is no more than the difference of the value $N_{OX} \cdot i$ from the set value N1. Here will be described the second application standby condition. It is possible to decide that the vehicle is moving backward if the following relation is satisfied at Step S5-60:

$$N_{C1X} < N_{OX} \cdot i + N1,$$

and if the following relation is satisfied at Step S5-68:

$$N_{C1X} < N_{OX} \cdot i - N1.$$

After this, it is possible to decide that the first clutch C1 ends its engagement, when the detected input RPM $N_{C1X}$ and the value $N_{OX} \cdot i$ become substantially equal to each other. Thus, the actual end of the application of the first clutch C1 is decided if the following relation is satisfied:

$$N_{C1X} > N_{OX} \cdot i - N1.$$

In this case, the set value N1 and the set time $T_{OFFG}$ are set for the same reason as that of the set value N1 and the set time $T_{NOT\ IDLE}$, as described in connection with Step S5-15.

Step S5-72: The flag FD is set to 1.

Step S5-73: The time measured by another timer is set to 0.

Step S5-74: It is decided whether or not the time T2 measured by another timer is longer than the set time $T_{OFFG}$. The routine advances to Step S5-75, if the time T2 is longer than the set time $T_{OFFG}$, but returns to Step S5-55 if the time T2 is shorter than the set time $T_{OFFG}$. In this case, the set time $T_{OFFG}$ is set as short as 0.05 [secs].

Step S5-75: The abrupt raising means 107 turns OFF the third solenoid signal $S_3$ for opening/closing the solenoid valve S3.

According to the present invention, as described hereinbefore, a control system for an automatic transmission comprises: a fluid transmission unit for transmitting the rotation of an engine to a speed change unit; a clutch adapted to be applied when a forward running range is selected, to transmit the rotation of the fluid transmission unit to the transmission mechanism of the speed change unit; a hydraulic servo for applying/releasing the clutch; throttle opening detecting means for detecting a throttle opening; stop state detecting means for detecting a vehicle stop state in which a forward running range is selected, in which the throttle opening is fully closed, in which the brake pedal is depressed and in which the vehicle speed is substantially zero; input RPM detecting means for detecting the input RPM of the speed change unit; output RPM detecting means for detecting the output RPM of the speed change unit; hydraulic control means for controlling the oil pressure to be fed to the hydraulic servo; and a control unit.

Moreover, the control unit includes: release means for releasing the clutch by lowering the oil pressure to be fed to the hydraulic servo if the vehicle stop state is detected by the stop state detecting means; and application means for applying the clutch by raising the oil pressure to be fed to the hydraulic servo, if the vehicle stop state is not detected by the stop state detecting means while the clutch is being released by the release means.

If it is detected in this case by the stop state detecting means that the forward running range is selected, that the throttle opening is fully closed, that the brake pedal is depressed and that the vehicle speed is substantially zero, the neutral control is started.

Moreover, the release means lowers the oil pressure to be fed to the hydraulic servo, thereby to release the clutch. On the other hand, if the vehicle stop state is not detected by the stop state detecting means while the clutch is being released by the release means, the application means raises the oil pressure to be fed to the hydraulic servo, thereby to apply the clutch.

Moreover, the application means includes: gradual raising means for gradually raising the oil pressure to be fed to the hydraulic servo; application ending condition satisfaction deciding means for deciding whether or not an application ending condition dictating the application end of the clutch, on the basis of the input RPM, the output RPM and the gear ratio of a target gear stage; and abrupt raising means for abruptly raising the oil pressure to be fed to the hydraulic servo, on the basis of the satisfaction of the application ending condition.

Still moreover, the abrupt raising means abruptly raises the oil pressure to be fed to the hydraulic servo, when the application ending condition is satisfied if the throttle opening is not fully closed, and after a set time has elapsed from the instant of satisfying the application ending condition if the throttle opening is fully closed.

Therefore, if the vehicle stop state is not detected by the stop state detecting means while the clutch is being released by the release means, the gradual raising means gradually raises the oil pressure to be fed to the hydraulic servo.

At this time, the output RPM increases as the input RPM decreases. The application ending condition satisfaction deciding means decides whether or not the application ending condition dictating the application end of the clutch, on the basis of the input RPM, the output RPM and the gear ratio of the target gear stage.

If the throttle opening is not fully closed, that is, if the accelerator pedal is depressed, a relatively high torque is transmitted to the speed change unit to increase the output torque of the vehicle, as the engagement of the clutch starts. Thus, even if the vehicle moves backward at the instant of applying the clutch, the output torque acts to prevent the backward movement of the vehicle abruptly. As a result, the decision of the end of application is not mistaken by the backward movement of the vehicle.

If the throttle opening is not fully closed, therefore, the oil pressure is gradually raised at first and is then abruptly raised if the application ending condition is satisfied.

As a result, the clutch does not slip even if the input torque to the speed change unit is caused to fluctuate by depressing the accelerator pedal or the like.

If the throttle opening is fully closed, on the other hand, the end of application may be misjudged as the vehicle moves backward. Therefore, the oil pressure to be fed to the hydraulic servo is abruptly raised after a set time has elapsed from the instant of satisfying the application ending condition. As a result, it is possible to prevent the abrupt the rise in the oil pressure in the course of application of the clutch and accordingly the occurrence of the application shock.

In this case, the throttle opening is fully closed so that the input torque to the speed change unit hardly fluctuates. Thus, the clutch does not slip even if the decision of the application end is more or less delayed.

Another control system for an automatic transmission of the present invention comprises: a fluid transmission unit for transmitting the rotation of an engine to a speed change unit; a clutch adapted to be applied when a forward running range is selected, to transmit the rotation of the fluid transmission unit to the transmission mechanism of the speed change unit; a hydraulic servo for applying/releasing the clutch; throttle opening detecting means for detecting a throttle opening; stop state detecting means for detecting a vehicle stop state in which a forward running range is selected, in which the throttle opening is fully closed, in which the brake pedal is depressed and in which the vehicle speed is substantially zero; input RPM detecting means for detecting the input RPM of the speed change unit; output RPM detecting means for detecting the output RPM of the speed change unit; hydraulic control means for controlling the oil pressure to be fed to the hydraulic servo; and a control unit.

Moreover, the control unit includes: release means for releasing the clutch by lowering the oil pressure to be fed to the hydraulic servo if the vehicle stop state is detected by the stop state detecting means; and application means for applying the clutch by raising the oil pressure to be fed to the hydraulic servo, if the vehicle stop state is not detected by the stop state detecting means while the clutch is being released by the release means.

If it is detected in this case by the stop state detecting means that the forward running range is selected, that the throttle opening is fully closed, that the brake pedal is depressed and that the vehicle speed is substantially zero, the neutral control is started.

Moreover, the release means lowers the oil pressure to be fed to the hydraulic servo, thereby to release the clutch. On the other hand, if the vehicle stop state is not detected by the stop state detecting means while the clutch is being released by the release means, the application means raises the oil pressure to be fed to the hydraulic servo, thereby to apply the clutch.

Moreover, the application means includes: gradual raising means for gradually raising the oil pressure to be fed to the hydraulic servo; application ending condition satisfaction deciding means for deciding whether or not an application ending condition dictating the application end of the clutch, on the basis of the input RPM, the output RPM and the gear ratio of a target gear stage; application standby condition satisfaction deciding means for deciding whether or not an application standby condition is satisfied after the application ending condition has been satisfied; and abrupt raising means for abruptly raising the oil pressure to be fed to the hydraulic servo, on the basis of the satisfactions of the application ending condition and the application standby condition.

Still moreover, the abrupt raising means abruptly raises the oil pressure to be fed to the hydraulic servo, when the application ending condition is satisfied if the throttle opening is not fully closed, after a second set time has elapsed from the instant of satisfying the application ending condition if the application standby condition is satisfied by the time a first set time elapses from the instant of satisfying the application ending condition, and after the first set time has elapsed from the instant of satisfying the application ending condition if the throttle opening is fully closed and if the application standby condition is not satisfied by the time the first set time elapses from the instant of satisfying the application ending condition.

Therefore, if the vehicle stop state is not detected by the stop state detecting means while the clutch is being released by the release means, the gradual raising means gradually raises the oil pressure to be fed to the hydraulic servo.

At this time, the output RPM increases as the input RPM decreases. The application ending condition satisfaction deciding means decides whether or not the application ending condition dictating the application end of the clutch, on the basis of the input RPM, the output RPM and the gear ratio of the target gear stage. Next, the application standby condition satisfaction deciding means whether or not the application standby condition is satisfied after the application ending condition has been satisfied.

Moreover, the abrupt raising means gradually raises the oil pressure at first, if the throttle opening is not fully closed, and then abruptly raises it if the application ending condition is satisfied.

As a result, the clutch does not slip even if the input torque to the speed change unit is caused to fluctuate by depressing the accelerator pedal or the like.

If the throttle opening is fully closed, on the other hand, the decision of the end of application may be mistaken. Therefore, whether or not the application standby condition is satisfied is decided by the time a first set time elapses from the instant of satisfying the application ending condition.

If the application standby condition is satisfied, it is found that the vehicle is moving backward. Therefore, the oil pressure to be fed to the hydraulic servo is abruptly raised after a second set time has elapsed from the instant of satisfying the application ending condition. This makes it possible to prevent the abrupt rise in the oil pressure in the course of application of the clutch and accordingly the occurrence of the application shock.

If the application standby condition is not satisfied by the time the first set time elapses, it is found that the vehicle is not moving back. Therefore, the oil pressure to be fed to the hydraulic servo is abruptly raised after the second set time has elapsed from the instant of satisfying the application ending condition. This makes it possible to prevent the unnecessary delay of the rise in the oil pressure.

Still another control system for an automatic transmission of the present invention comprises: a fluid transmission unit for transmitting the rotation of an engine to a speed change unit; a clutch adapted to be applied when a forward running range is selected, to transmit the rotation of the fluid transmission unit to the transmission mechanism of the speed change unit; a hydraulic servo for applying/releasing the clutch; throttle opening detecting means for detecting a throttle opening; stop state detecting means for detecting a vehicle stop state in which a forward running range is selected, in which the throttle opening is fully closed, in which the brake pedal is depressed and in which the vehicle speed is substantially zero; input RPM detecting means for detecting the input RPM of the speed change unit; output RPM detecting means for detecting the output RPM of the speed change unit; hydraulic control means for controlling the oil pressure to be fed to the hydraulic servo; and a control unit.

Moreover, the control unit includes: release means for releasing the clutch by lowering the oil pressure to be fed to the hydraulic servo if the vehicle stop state is detected by the stop state detecting means; and application means for applying the clutch by raising the oil pressure to be fed to the hydraulic servo, if the vehicle stop state is not detected by the stop state detecting means while the clutch is being released by the release means.

If it is detected in this case by the stop state detecting means that the forward running range is selected, that the throttle opening is fully closed, that the brake pedal is depressed and that the vehicle speed is substantially zero, the neutral control is started.

Moreover, the release means lowers the oil pressure to be fed to the hydraulic servo, thereby to release the clutch. On the other hand, if the vehicle stop state is not detected by the stop state detecting means while the clutch is being released by the release means, the application means raises the oil pressure to be fed to the hydraulic servo, thereby to apply the clutch.

Moreover, the application means includes: gradual raising means for gradually raising the oil pressure to be fed to the hydraulic servo; first application ending condition satisfaction deciding means for deciding whether or not a first application ending condition dictating the application end of the clutch, on the basis of the input RPM, the output RPM and the gear ratio of a target gear stage; application standby condition satisfaction deciding means for deciding whether or not an application standby condition is satisfied after the first application ending condition has been satisfied; second application ending condition satisfaction deciding means for deciding whether or not a second application ending condition is satisfied after the application standby condition has been satisfied; and abrupt raising means for abruptly raising the oil pressure to be fed to the hydraulic servo, on the basis of the satisfactions of the first application ending condition, the application standby condition and the second application ending condition.

Still moreover, the abrupt raising means abruptly raises the oil pressure to be fed to the hydraulic servo, when the first application ending condition is satisfied if the throttle opening is not fully closed, when the second application ending condition is satisfied if the throttle opening is fully closed and if the application standby condition is satisfied by the time a first set time elapses from the instant of satisfying the first application ending condition, and after the second set time has elapsed from the instant of satisfying the second application ending condition if the application standby condition is not satisfied by the time the first set time elapses from the instant of satisfying the first application ending condition.

Therefore, if the vehicle stop state is not detected by the stop state detecting means while the clutch is being released by the release means, the gradual raising means gradually raises the oil pressure to be fed to the hydraulic servo.

At this time, the output RPM increases as the input RPM decreases. The first application ending condition satisfaction deciding means decides whether or not the first application ending condition dictating the application end of the clutch, on the basis of the input RPM, the output RPM and the gear ratio of the target gear stage. Next, the application standby condition satisfaction deciding means decides whether or not the application standby condition is satisfied after the first application ending condition has been satisfied.

Moreover, the abrupt raising means gradually raises the oil pressure at first, if the throttle opening is not fully closed, and then abruptly raises it if the first application ending condition is satisfied.

As a result, the clutch does not slip even if the input torque to the speed change unit is caused to fluctuate by depressing the accelerator pedal or the like.

If the throttle opening is fully closed, on the other hand, the decision of the end of application may be mistaken. Therefore, whether or not the application standby condition is satisfied is decided by the time a first set time elapses after the first application ending condition has been satisfied. After the application standby condition has been satisfied, it is further decided whether or not the second application ending condition is satisfied.

If the application standby condition is satisfied by the time the first set time elapses from the instant of satisfying the first application ending condition, the oil pressure to be fed to the hydraulic servo is abruptly raised when the second application ending condition is satisfied. This makes it possible to prevent the abrupt rise in the oil pressure in the course of application of the clutch and accordingly the occurrence of the application shock.

If the application standby condition is not satisfied by the time the first set time elapses from the instant of satisfying the first application ending condition, it is found that the vehicle is not moving back. Therefore, the oil pressure to be fed to the hydraulic servo is abruptly raised after the first set time has elapsed from the instant of satisfying the first application ending condition. This makes it possible to prevent the unnecessary delay of the rise in the oil pressure.

Incidentally, the present invention should not be limited to the foregoing embodiments but can be modified in various manners on the basis of its gist, and these modifications should not be excluded from the scope of the present invention.

### Claims

**1.** A control system for an automatic transmission, comprising: a fluid transmission unit (12) for transmitting the rotation of an engine (10) to a speed change unit (16); a clutch (C) adapted to be applied when a forward running range is selected, to transmit the rotation of said fluid transmission unit (12) to the transmission mechanism of said speed change unit (16); a hydraulic servo (C-1) for applying/releasing said clutch (C); throttle opening detecting means (50) for detecting a throttle opening; stop state detecting means (101) for detecting a vehicle stop state in which a forward running range is selected, in which the throttle opening is fully closed, in which the brake pedal is depressed and in which the vehicle speed is substantially zero; input RPM detecting means (47) for detecting the input RPM of said speed change unit (16); output RPM detecting means (51) for detecting the output RPM of said speed change unit (16); hydraulic control means (102) for controlling the oil pressure to be fed to said hydraulic servo (C-1); and a control unit (41),

wherein said control unit (41) includes: release means (103) for releasing said clutch (C) by lowering the oil pressure to be fed to said hydraulic servo (C-1) if said vehicle stop state is detected by said stop state detecting means (101); and application means (104) for applying said clutch (C) by raising the oil pressure to be fed to said hydraulic servo (C-1), if said vehicle stop state is not detected by said stop state detecting means (101) while said clutch (C) is being released by said release means (103),
wherein said application means (104) includes: gradual raising means (105) for gradually raising the oil pressure to be fed to said hydraulic servo (C-1); application ending condition satisfaction deciding means (106) for deciding whether or not an application ending condition dictating the application end of said clutch (C) is satisfied, on the basis of said input RPM, said output RPM and the gear ratio of a target gear stage; and abrupt raising means (107) for abruptly raising the oil pressure to be fed to said hydraulic servo (C-1), on the basis of the satisfaction of said application ending condition, and
wherein said abrupt raising means (107) abruptly raises the oil pressure to be fed to said hydraulic servo (C-1), when said application ending condition is satisfied in the case that the throttle opening is not fully closed, and alternatively, after a set time has elapsed from the instant of satisfying said application ending condition in the case that the throttle opening is fully closed.

**2.** A control system for an automatic transmission, comprising: a fluid transmission unit (12) for transmitting the rotation of an engine (10) to a speed change unit (16); a clutch (C) adapted to be applied when a forward running range is selected, to transmit the rotation of said fluid transmission unit (12) to the transmission mechanism of said speed change unit (16); a hydraulic servo (C-1) for applying/releasing said clutch (C); throttle opening detecting means (50) for detecting a throttle opening; stop state detecting means (101) for detecting a vehicle stop state in which a forward running range is selected, in which the throttle opening is fully closed, in which the brake pedal is depressed and in which the vehicle speed is substantially zero; input RPM detecting means (47) for detecting the input RPM of said speed change unit (16); output RPM detecting means (51) for detecting the output RPM of said speed change unit (16); hydraulic control means (102) for controlling the oil pressure to be fed to said hydraulic servo (C-1); and a control unit (41),

wherein said control unit (41) includes: release means (103) for releasing said clutch (C) by lowering the oil pressure to be fed to said hydraulic servo (C-1) if said vehicle stop state is detected by said stop state detecting means (101); and application means (104) for applying said clutch (C) by raising the oil pressure to be fed to said hydraulic servo (C-1), if said vehicle stop state is not detected by said stop state detecting means (101) while said clutch (C) is being released by said release means (103),
wherein said application means (104) includes: gradual raising means (105) for gradually raising the oil pressure to be fed to said hydraulic servo (C-1); application ending condition satisfaction deciding means (106) for deciding whether or not an application ending condition dictating the application end of said clutch (C) is satisfied, on the basis of said input RPM, said output RPM and the gear ratio of a target gear stage; application standby condition satisfaction deciding means for deciding whether or not an application standby condition is satisfied after said application ending condition has been satisfied; and abrupt raising means (107) for abruptly raising the oil pressure to be fed to said hydraulic servo (C-1), on the basis of the satisfactions of said application ending condition and said application standby condition, and
wherein said abrupt raising means (107) abruptly raises the oil pressure to be fed to said hydraulic servo (C-1), as a first alternative when said application ending condition is satisfied in the case that the throttle opening is not fully closed, as a second alternative after a second set time has elapsed from the instant of satisfy-ing said application ending condition in the case that the throttle opening is fully closed and if said application standby condition is satisfied by the time a first set time elapses from the instant of satisfying said application ending condition wherein said first set time is shorter than said second set time, and as a third alternative after said first set time has elapsed from the instant of satisfying said application ending condition in the case that the throttle opening is fully closed and if said application standby condition is not satisfied by the time said first set time elapses from the instant of satisfying said application ending conditions, wherein said first set time is shorter than said second set time.

**3.** A control system for an automatic transmission, comprising: a fluid transmission unit (12) for transmitting the rotation of an engine (10) to a speed change unit (16); a clutch (C) adapted to be applied when a forward running range is selected, to transmit the rotation of said fluid transmission unit (12) to the transmission mechanism of said speed change unit (16); a hydraulic servo (C-1) for applying/releasing said clutch (C); throttle opening detecting means (50) for detecting a throttle opening; stop state detecting means (101) for detecting a vehicle stop state in which a forward running range is selected, in which the throttle opening is fully closed, in which the brake pedal is depressed and in which the vehicle speed is substantially zero; input RPM detecting means (47) for detecting the input RPM of said speed change unit (16); output RPM detecting means (51) for detecting the output RPM of said speed change unit (16); hydraulic control means (102) for controlling the oil pressure to be fed to said hydraulic servo (C-1); and a control unit (41),

wherein said control unit (41) includes: release means (103) for releasing said clutch (C) by lowering the oil pressure to be fed to said hydraulic servo (C-1) if said vehicle stop state is detected by said stop state detecting means (101); and application means (104) for applying said clutch (C) by raising the oil pressure to be fed to said hydraulic servo (C-1), if said vehicle stop state is not detected by said stop state detecting means (101) while said clutch (C) is being released by said release means (103),
wherein said application means (104) includes: gradual raising means (105) for gradually raising the oil pressure to be fed to said hydraulic servo (C-1), first application ending condition satisfaction deciding means for deciding whether or not a first application ending condition dictating the application end of said clutch (C) is satisfied, on the basis of said input RPM, said output RPM and the gear ratio of a target gear stage: application standby condition satisfaction deciding means for deciding whether or not an application standby condition is satisfied after said first application ending condition has been satisfied; second application ending condition satisfaction deciding means for deciding whether or not a second application ending condition is satisfied after said application standby condition has been satisfied; and abrupt raising means (107) for abruptly raising the oil pressure to be fed to said hydraulic servo (C-1), on the basis of the satisfactions of said first application ending condition, said application standby condition and said second application ending condition, and

wherein said abrupt raising means (107) abruptly raises the oil pressure to be fed to said hydraulic servo C-1, as a first alternative when said first application ending condition is satisfied in the case that the throttle opening is not fully closed, as a second alternative when said second application ending condition is satisfied in the case that the throttle opening is fully closed and if said application standby condition is satisfied by the time a first set time elapses from the instant of satisfying said first application ending condition, and as a third alternative after said first set time has elapsed from the instant of satisfying said first application ending condition in the case that the throttle opening is fully closed and if said application standby condition is not satisfied by the time said first set time elapses from the instant of satisfying said first application ending condition,

**4.** A control system for an automatic transmission according to claim 1,

wherein said application ending condition is satisfied if calculatively said clutch (C) is in a state immediately before the end of its application.

**5.** A control system for an automatic transmission according to claim 1 or 4,

wherein said set time is set to that by which the application of said clutch (C) is ended.

**6.** A control system for an automatic transmission according to claim 2,

wherein said application ending condition is satisfied if calculatively said clutch (C) is in a state immediately before the end of its application, and

wherein said application standby condition is satisfied if calculatively said clutch (C) is in a state immediately before the start of its release after its application has been ended.

**7.** A control system for an automatic transmission according to claim 2 or 6,

wherein said first set time is set to that which is calculatively required for said clutch to be in a state immediately after the start of its application after it has been in a state immediately before the end of its application, and

wherein said second set time is set to that by which the application of said clutch (C) is ended.

**8.** A control system for an automatic transmission according to claim 3.

wherein said first application ending condition is satisfied if calculatively said clutch (C) is in a state immediately before the end of its application,

wherein said application standby condition is satisfied if calculatively said clutch (C) is in a state immediately after the start of its release after its application has been ended, and

wherein said second application ending condition is satisfied if calculatively said clutch (C) is in a state immediately before the end of its application after said first application ending condition has been satisfied.

**9.** A control system for an automatic transmission according to claim 3 or 8,

wherein said first set time is set to that which is calculatively required for said clutch to be in a state immediately after the start of its application after it has been in a state immediately before the end of its application.

**Patentansprüche**

**1.** Steuerungssystem für ein Automatikgetriebe mit:

einer Strömungsgetriebe- oder Fluidkraftübertragungseinheit (12) zum Übertragen der Drehbewegung eines Motors (10) zu einer Gangschalteinheit (16);

einer Kupplung (C), die dazu geeignet ist, eingerückt zu werden, wenn ein Vorwärtsfahrbereich ausgewählt ist, um die Drehbewegung der Strömungsgetriebe-oder Fluidkraftübertragungseinheit (12) zum Getriebemechanismus der Gangschalteinheit (16) zu übertragen;

einer Hydraulik-Servo (C-1) zum Einrücken/ Ausrücken der Kupplung (C);

einer Drosselklappenöffnungserfassungseinrichtung (50) zum Erfassen einer Drosselklappenöffnung;

einer Haltezustanderfassungseinrichtung (101) zum Erfassen eines Haltezustands eines Fahrzeugs, in dem ein Vorwärtsfahrbereich ausgewählt ist, die Drosselklappenöffnung vollständig geschlossen ist, das Bremspedal betätigt ist und die Fahrzeuggeschwindigkeit im wesentlichen null beträgt;

einer Eingangsdrehzahlerfassungseinrichtung (47) zum Erfassen der Eingangsdrehzahl der Gangschalteinheit (16);
einer Ausgangsdrehzahlerfassungseinrichtung (51) zum Erfassen der Ausgangsdrehzahl der Gangschalteinheit (16);
einer Hydrauliksteuerungseinrichtung (102) zum Steuern des der Hydraulik-Servo (C-1) zuzuführenden Hydraulikdrucks; und
einer Steuereinheit (41);

wobei die Steuereinheit (41) aufweist:
eine Ausrückeinrichtung (103) zum Ausrücken der Kupplung (C) durch Vermindern des der Hydraulik-Servo (C-1) zuzuführenden Öldrucks, wenn durch die Haltezustanderfassungseinrichtung (101) der Haltezustand des Fahrzeugs erfaßt wurde, und eine Einrückeinrichtung (104) zum Einrücken der Kupplung (C) durch Erhöhen des der Hydraulik-Servo (C-1) zuzuführenden Öldrucks, wenn durch die Haltezustanderfassungseinrichtung (101) der Haltezustand des Fahrzeugs nicht erfaßt wird, während die Kupplung (C) durch die Ausrückeinrichtung (103) ausgerückt wird;
wobei die Einrückeinrichtung (104) aufweist:

eine Einrichtung (105) für eine graduelle Druckerhöhung zum graduellen Erhöhen des der Hydraulik-Servo (C-1) zuzuführenden Öldrucks,
eine Einrichtung (106) zum Bestimmen der Erfüllung einer Einrückendebedingung zum Bestimmen, ob eine Einrückendebedingung erfüllt ist oder nicht, gemäß der das Einrückende der Kupplung (C) bestimmt wird, auf der Basis der Eingangsdrehzahl, der Ausgangsdrehzahl und des Übersetzungsverhältnisses einer Ziel-Gangstufe, und eine Einrichtung (107) für eine abrupte Druckerhöhung zum abrupten Erhöhen des der Hydraulik-Servo (C-1) zuzuführenden Öldrucks auf der Basis der Erfüllung der Einrückendebedingung;
wobei die Einrichtung (107) für eine abrupte Druckerhöhung den der Hydraulik-Servo (C-1) zuzuführenden Öldruck abrupt erhöht, wenn die Einrückendebedingung erfüllt ist, für den Fall, daß die Drosselklappenöffnung nicht vollständig geschlossen ist, und alternativ, nachdem eine vorgegebene Zeit vom Zeitpunkt der Erfüllung der Einrückendebedingung verstrichen ist, für den Fall, daß die Drosselklappe vollständig geschlossen ist.

**2.** Steuerungssystem für ein Automatikgetriebe mit:

einer Strömungsgetriebe- oder Fluidkraftübertragungseinheit (12) zum Übertragen der Drehbewegung eines Motors (10) zu einer Gangschalteinheit (16);
einer Kupplung (C), die dazu geeignet ist, eingerückt zu werden, wenn ein Vorwärtsfahrbereich ausgewählt ist, um die Drehbewegung der Strömungsgetriebe- oder Fluidkraftübertragungseinheit (12) zum Getriebemechanismus der Gangschalteinheit (16) zu übertragen;
einer Hydraulik-Servo (C-1) zum Einrücken/Ausrücken der Kupplung (C) ;
einer Drosselklappenöffnungserfassungseinrichtung (50) zum Erfassen einer Drosselklappenöffnung;
einer Haltezustanderfassungseinrichtung (101) zum Erfassen eines Haltezustands eines Fahrzeugs, in dem ein Vorwärtsfahrbereich ausgewählt ist, die Drosselklappenöffnung vollständig geschlossen ist, das Bremspedal betätigt ist und die Fahrzeuggeschwindigkeit im wesentlichen null beträgt;
einer Eingangsdrehzahlerfassungseinrichtung (47) zum Erfassen der Eingangsdrehzahl der Gangschalteinheit (16);
einer Ausgangsdrehzahlerfassungseinrichtung (51) zum Erfassen der Ausgangsdrehzahl der Gangschalteinheit (16);
einer Hydrauliksteuerungseinrichtung (102) zum Steuern des der Hydraulik-Servo (C-1) zuzuführenden Öldrucks; und
einer Steuereinheit (41);

wobei die Steuereinheit (41) aufweist:
eine Ausrückeinrichtung (103) zum Ausrükken oder Lösen der Kupplung (C) durch Vermindern des der Hydraulik-Servo (C-1) zuzuführenden Öldrucks, wenn durch die Haltezustanderfassungseinrichtung (101) der Haltezustand des Fahrzeugs erfaßt wurde, und eine Einrückeinrichtung (104) zum Einrücken der Kupplung (C) durch Erhöhen des der Hydraulik-Servo (C-1) zuzuführenden Öldrucks, wenn durch die Haltezustanderfassungseinrichtung (101) der Haltezustand des Fahrzeugs nicht erfaßt wird, während die Kupplung (C) durch die Ausrückeinrichtung (103) ausgerückt wird;
wobei die Einrückeinrichtung (104) aufweist:

eine Einrichtung (105) für eine graduelle Druckerhöhung zum graduellen Erhöhen des der Hydraulik-Servo (C-1) zuzuführenden Öldrucks;
eine Einrichtung (106) zum Bestimmen der Erfüllung einer Einrückendebedingung zum Bestimmen, ob eine Einrückendebedingung erfüllt ist oder nicht, gemäß der das Einrückende der Kupplung (C) bestimmt wird, auf der Basis der Eingangsdrehzahl, der Ausgangsdrehzahl und des Übersetzungsverhältnisses einer Ziel-Gangstufe;
eine Einrichtung zum Bestimmen der Erfüllung einer Einrückbereitschaftsbedingung zum Bestimmen, ob eine Einrückbereitschaftsbedingung erfüllt ist, nachdem die Einrückendebedingung erfüllt gewesen ist; und
eine Einrichtung (107) für eine abrupte Druckerhöhung zum abrupten Erhöhen des der Hydraulik-Servo (C-1) zuzuführenden Öldrucks auf der Basis der Erfüllung der Einrückendebedingung und der Einrückbereitschaftsbedingung;
wobei die Einrichtung (107) für eine abrupte Druckerhöhung den der Hydraulik-Servo (C-1) zuzuführenden Öldruck als eine erste Alternative abrupt erhöht, wenn die Einrückendebedingung erfüllt ist, für den Fall, daß die Drosselklappenöffnung nicht vollständig geschlossen ist, und als eine zweite Altenative, nachdem eine zweite vorgegebene Zeit vom Zeitpunkt der Erfüllung der Einrückendebedingung verstrichen ist, für den Fall, daß die Drosselklappe vollständig geschlossen ist, wenn gemäß einer ersten vorgegebenen Zeit, die von dem Zeitpunkt der Erfüllung des Einrückendezustands verstrichen ist, die Einrückbereitschaftsbedingung erfüllt ist, wobei die erste vorgegebene Zeit kürzer ist als die zweite vorgegebene Zeit, und als eine dritte Alternative, nachdem die erste vorgegebene Zeit vom Zeitpunkt der Erfüllung der Einrückendebedingung verstrichen ist, für den Fall, daß die Drosselklappe vollständig geschlossen ist, und wenn gemäß der ersten Zeit, die vom Zeitpunkt der Erfüllung der Einrückendebedingung verstrichen ist, die Einrückbereitschaftsbedingung nicht erfüllt ist, wobei die erste vorgegebene Zeit kürzer ist als die zweite vorgegebene Zeit.

**3.** Steuerungssystem für ein Automatikgetriebe mit:

einer Strömungsgetriebe- oder Fluidkraftübertragungseinheit (12) zum Übertragen der Drehbewegung eines Motors (10) zu einer Gangschalteinheit (16);
einer Kupplung (C), die dazu geeignet ist, eingerückt zu werden, wenn ein Vorwärtsfahrbereich ausgewählt ist, um die Drehbewegung der Strömungsgetriebe- oder Fluidkraftübertragungseinheit (12) zum Getriebemechanismus der Gangschalteinheit (16) zu übertragen;
einer Hydraulik-Servo (C-1) zum Einrükken/Ausrücken der Kupplung (C);
einer Drosselklappenöffnungserfassungseinrichtung (50) zum Erfassen einer Drosselklappenöffnung;
einer Haltezustanderfassungseinrichtung (101) zum Erfassen eines Haltezustands eines Fahrzeugs, in dem ein Vorwärtsfahrbereich ausgewählt ist, die Drosselklappenöffnung vollständig geschlossen ist, das Bremspedal betätigt ist und die Fahrzeuggeschwindigkeit im wesentlichen null beträgt;
einer Eingangsdrehzahlerfassungseinrichtung (47) zum Erfassen der Eingangsdrehzahl der Gangschalteinheit (16);
einer Ausgangsdrehzahlerfassungseinrichtung (51) zum Erfassen der Ausgangsdrehzahl der Gangschalteinheit (16);
einer Hydrauliksteuerungseinrichtung (102) zum Steuern des der Hydraulik-Servo (C-1) zuzuführenden Hydraulikdrucks; und
einer Steuereinheit (41);

wobei die Steuereinheit (41) aufweist:

eine Ausrückeinrichtung (103) zum Ausrücken oder Lösen der Kupplung (C) durch Vermindern des der Hydraulik-Servo (C-1) zuzuführenden Öldrucks, wenn durch die Haltezustanderfassungseinrichtung (101) der Haltezustand des Fahrzeugs erfaßt wurde;
und eine Einrückeinrichtung (104) zum Einrükken der Kupplung (C) durch Erhöhen des der Hydraulik-Servo (C-1) zuzuführenden Öldrucks, wenn durch die Haltezustanderfassungseinrichtung (101) der Haltezustand des Fahrzeugs nicht erfaßt wird, während die Kupplung (C) durch die Ausrückeinrichtung (103) ausgerückt wird;

wobei die Einrückeinrichtung (104) aufweist:

eine Einrichtung (105) für eine graduelle Druckerhöhung zum graduellen Erhöhen des der Hydraulik-Servo (C-1) zuzuführenden Öldrucks;
eine Einrichtung zum Bestimmen der Erfüllung einer ersten Einrückendebedingung zum Bestimmen, ob eine erste Einrückendebedingung erfüllt ist oder nicht, gemäß der das Einrückende der Kupplung (C) bestimmt wird, erfüllt ist, auf der Basis der Eingangsdrehzahl, der Ausgangsdrehzahl und des Übersetzungsverhältnisses einer Ziel-Gangstufe;
eine Einrichtung zum Bestimmen der Erfüllung einer Einrückbereitschaftsbedingung zum Bestimmen, ob eine Einrückbereitschaftsbedingung erfüllt ist, nachdem die erste Einrückendebedingung erfüllt gewesen ist;
eine Einrichtung zum Bestimmen der Erfüllung einer zweiten Einrückendebedingung zum Bestimmen, ob eine zweite Einrückendebedingung erfüllt ist, nachdem die Einrückbereitschaftsbedingung erfüllt gewesen ist; und
eine Einrichtung (107) für eine abrupte Druckerhöhung zum abrupten Erhöhen des der Hydraulik-Servo (C-1) zuzuführenden Öldrucks auf der Basis der Erfüllung der ersten Einrückendebedingung, der Einrückbereitschaftsbedingung und der zweiten Einrückendebedingung;

wobei die Einrichtung (107) für eine abrupte Druckerhöhung den der Hydraulik-Servo (C-1) zuzuführenden Öldruck als eine erste Alternative abrupt erhöht, wenn die erste Einrückendebedingung erfüllt ist, für den Fall, daß die Drosselklappenöffnung nicht vollständig geschlossen ist, als eine zweite Alternative, wenn die zweite Einrückendebedingung erfüllt ist, für den Fall, daß die Drosselklappenöffnung vollständig geschlossen ist und gemäß der ersten vorgegebenen Zeit, die vom Zeitpunkt der Erfüllung der ersten Einrückendebedingung verstrichen ist, die Einrückbereitschaftsbedingung erfüllt ist, und als eine dritte Alternative, nachdem die erste vorgegebene Zeit vom Zeitpunkt der Erfüllung der ersten Einrückendebedingung verstrichen ist, für den Fall, daß die Drosselklappe vollständig geschlossen ist, wenn gemäß der ersten vorgegebenen Zeit, die von dem Zeitpunkt der Erfüllung der ersten Einrückendebedingung verstrichen ist, die Einrückbereitschaftsbedingung nicht erfüllt ist.

**4.** Steuerungssystem nach Anspruch 1,
wobei die Einrückendebedingung erfüllt ist, wenn die Kupplung (C) rechnerisch auf einen Zustand unmittelbar vor dem Ende ihres Einrückvorgangs eingestellt ist.

**5.** Steuerungssystem nach Anspruch 1 oder 4,
wobei die vorgegebene Zeit so gesetzt ist, daß der Einrückvorgang der Kupplung (C) innerhalb der vorgegebenen Zeit beendet wird.

**6.** Steuerungssystem nach Anspruch 2,

wobei die Einrückendebedingung erfüllt ist, wenn die Kupplung (C) rechnerisch auf einen Zustand unmittelbar vor dem Ende ihres Einrückvorgangs eingestellt ist; und
wobei die Einrückbereitschaftsbedingung erfüllt ist, wenn rechnerisch die Kupplung (C) auf einen Zustand unmittelbar vor Beginn ihrer Freigabe eingestellt ist, nachdem ihr Einrückvorgang beendet wurde.

**7.** Steuerungssystem nach Anspruch 2 oder 6,

wobei die erste vorgegebene Zeit auf eine Zeit gesetzt wird, die rechnerisch erforderlich ist, um die Kupplung in einen Zustand unmittelbar nach Beginn ihres Einrückens zu bringen, nachdem sie auf einen Zustand unmittelbar vor dem Ende ihres Einrückens eingestellt war; und
wobei die zweite vorgegebene Zeit auf eine Zeit gesetzt wird, in der der Einrückvorgang der Kupplung (C) beendet wird.

**8.** Steuerungssystem nach Anspruch 3,

wobei die erste Einrückendebedingung erfüllt ist, wenn die Kupplung (C) rechnerisch auf einen Zustand unmittelbar vor dem Ende ihres Einrückvorgangs eingestellt ist;
wobei die Einrückbereitschaftsbedingung erfüllt ist, wenn die Kupplung (C) rechnerisch auf einen Zustand unmittelbar nach Beginn ihrer Freigabe eingestellt ist, nachdem ihr Einrückvorgang beendet gewesen ist; und
wobei die zweite Einrückendebedingung erfüllt ist, wenn die Kupplung (C) rechnerisch auf einen Zustand unmittelbar vor dem Ende ihres Einrückens eingestellt ist, nachdem die erste Einrückendebedingung erfüllt gewesen ist.

**9.** Steuerungssystem nach Anspruch 3 oder 8,
wobei die erste vorgegebene Zeit auf eine Zeit eingestellt ist, die rechnerisch erforderlich ist, um die Kupplung auf einen Zustand unmittelbar nach dem Beginn ihres Einrückens zu bringen, nachdem sie auf einen Zustand unmittelbar vor dem Ende ihres Einrückens eingestellt gewesen ist.

**Revendications**

**1.** Système de commande pour transmission automatique, comprenant : une unité (12) de transmission de fluide pour transmettre la rotation d'un moteur (10) à une unité (16) de changement de vitesses; un embrayage (C) conçu pour être appliqué lorsqu'une vitesse avant est sélectionnée, pour transmettre la rotation de ladite unité (12) de transmission de fluide au mécanisme de transmission de ladite unité (16) de changement de vitesses; une servocommande hydraulique (C-1) pour appliquer/relâcher ledit embrayage (C); un moyen de détection (50) d'ouverture des gaz pour détecter l'ouverture des gaz; un moyen de détection (101) d'état d'arrêt pour détecter un état d'arrêt du véhicule dans lequel une vitesse avant est sélectionnée, dans lequel l'ouverture des gaz est complètement fermée, dans lequel la pédale de frein est enfoncée et dans lequel la vitesse du véhicule est sensiblement nulle; un moyen de détection (47) de vitesse de rotation d'entrée pour détecter la vitesse de rotation d'entrée de ladite unité (16) de changement de vitesses; un moyen de détection (51) de vitesse de rotation de sortie pour détecter la vitesse de rotation de sortie de ladite unité (16) de changement de vitesses; un moyen de commande hydraulique (102) pour commander la pression d'huile à envoyer à ladite servocommande hydraulique (C-1); et une unité de commande (41),

dans lequel ladite unité de commande (41) comprend : un moyen de relâchement (103) pour relâcher ledit embrayage (C) en abaissant la pression d'huile à envoyer à ladite servocommande hydraulique (C-1) si ledit état d'arrêt du véhicule est détecté par ledit moyen de détection (101) d'état d'arrêt; et un moyen d'application (104) pour appliquer ledit embrayage (C) en augmentant la pression d'huile à envoyer à ladite servocommande hydraulique (C-1), si ledit état d'arrêt du véhicule n'est pas détecté par ledit moyen de détection (101) d'état d'arrêt pendant que ledit moyen de relâchement (103) est en train de relâcher ledit embrayage (C),
dans lequel ledit moyen d'application (104) comprend : un moyen d'accroissement graduel (105) pour accroître graduellement la pression d'huile à envoyer à ladite servocommande hydraulique (C-1); un moyen (106) de décision de satisfaction de condition de fin d'application pour décider si une condition de fin d'application imposant la fin d'application dudit embrayage (C) est ou non satisfaite, en se basant sur ladite vitesse de rotation d'entrée, sur ladite vitesse de rotation de sortie et sur le rapport d'engrenages d'un étage d'engrenage cible; et un moyen d'accroissement brusque (107) pour accroître brusquement la pression d'huile à envoyer à ladite servocommande hydraulique (C-1), en se basant sur la satisfaction de ladite condition de fin d'application, et
dans lequel ledit moyen d'accroissement brusque (107) accroît brusquement la pression d'huile à envoyer à ladite servocommande hydraulique (C-1), soit lorsque ladite condition de fin d'application est satisfaite dans le cas où l'ouverture des gaz n'est pas complètement fermée, soit après l'écoulement d'un temps prédéterminé à partir de l'instant de satisfaction de ladite condition de fin d'application dans le cas où l'ouverture des gaz est complètement fermée.

**2.** Système de commande pour transmission automatique, comprenant : une unité (12) de transmission de fluide pour transmettre la rotation d'un moteur (10) à une unité (16) de changement de vitesses; un embrayage (C) conçu pour être appliqué lorsqu'une vitesse avant est sélectionnée, pour transmettre la rotation de ladite unité (12) de transmission de fluide au mécanisme de transmission de ladite unité (16) de changement de vitesses; une servocommande hydraulique (C-1) pour appliquer/relâcher ledit embrayage (C); un moyen de détection (50) d'ouverture des gaz pour détecter l'ouverture des gaz; un moyen de détection (101) d'état d'arrêt pour détecter un état d'arrêt du véhicule dans lequel une vitesse avant est sélectionnée, dans lequel l'ouverture des gaz est complètement fermée, dans lequel la pédale de frein est enfoncée et dans lequel la vitesse du véhicule est sensiblement nulle; un moyen de détection (47) de vitesse de rotation d'entrée pour détecter la vitesse de rotation d'entrée de ladite unité (16) de changement de vitesses; un moyen de détection (51) de vitesse de rotation de sortie pour détecter la vitesse de rotation de sortie de ladite unité (16) de changement de vitesses; un moyen de commande hydraulique (102) pour commander la pression d'huile à envoyer à ladite servocommande hydraulique (C-1); et une unité de commande (41),

dans lequel ladite unité de commande (41) comprend : un moyen de relâchement (103) pour relâcher ledit embrayage (C) en abaissant la pression d'huile à envoyer à ladite servocommande hydraulique (C-1) si ledit état d'arrêt du véhicule est détecté par ledit moyen de détection (101) d'état d'arrêt; et un moyen d'application (104) pour appliquer ledit embrayage (C) en augmentant la pression d'huile à envoyer à ladite servocommande hydraulique (C-1), si ledit état d'arrêt du véhicule n'est pas détecté par ledit moyen de détection (101) d'état d'arrêt pendant que ledit moyen de relâchement (103) est en train de relâcher ledit embrayage (C),
dans lequel ledit moyen d'application (104) comprend : un moyen d'accroissement graduel (105) pour accroître graduellement la pression d'huile à envoyer à ladite servocommande hydraulique (C-1); un moyen (106) de décision de satisfaction de condition de fin d'application pour décider si une condition de fin d'application imposant la fin d'application dudit embrayage (C) est ou non satisfaite, en se basant sur ladite vitesse de rotation d'entrée, sur ladite vitesse de rotation de sortie et sur le rapport d'engrenages d'un étage d'engrenage cible; un moyen de décision de satisfaction de condition d'attente d'application pour décider si une condition d'attente d'application est ou non satisfaite après que ladite condition de fin d'application a été satisfaite; et un moyen d'accroissement brusque (107) pour accroître brusquement la pression d'huile à envoyer à ladite servocommande hydraulique (C-1), en se basant sur la satisfaction de ladite condition de fin d'application et de ladite condition d'attente d'application, et
dans lequel ledit moyen d'accroissement brusque (107) accroît brusquement la pression d'huile à envoyer à ladite servocommande hydraulique (C-1), soit lorsque ladite condition de fin d'application est satisfaite dans le cas où l'ouverture des gaz n'est pas complètement fermée, soit après l'écoulement d'un deuxième temps prédéterminé à partir de l'instant de satisfaction de ladite condition de fin d'application dans le cas où l'ouverture des gaz est complètement fermée et si ladite condition d'attente d'application est satisfaite avant la fin de l'écoulement d'un premier temps prédéterminé à partir de l'instant de satisfaction de ladite condition de fin d'application, ledit premier temps prédéterminé étant plus court que ledit deuxième temps prédéterminé, soit après l'écoulement dudit premier temps prédéterminé à partir de l'instant de satisfaction de ladite condition de fin d'application dans le cas où l'ouverture des gaz est complètement fermée et si ladite condition d'attente d'application n'est pas satisfaite avant la fin de l'écoulement dudit premier temps prédéterminé à partir de l'instant de satisfaction de ladite condition de fin d'application, ledit premier temps prédéterminé étant plus court que ledit deuxième temps prédéterminé.

**3.** Système de commande pour transmission automatique, comprenant : une unité (12) de transmission de fluide pour transmettre la rotation d'un moteur (10) à une unité (16) de changement de vitesses; un embrayage (C) conçu pour être appliqué lorsqu'une vitesse avant est sélectionnée, pour transmettre la rotation de ladite unité (12) de transmission de fluide au mécanisme de transmission de ladite unité (16) de changement de vitesses; une servocommande hydraulique (C-1) pour appliquer/relâcher ledit embrayage (C); un moyen de détection (50) d'ouverture des gaz pour détecter l'ouverture des gaz; un moyen de détection (101) d'état d'arrêt pour détecter un état d'arrêt du véhicule dans lequel une vitesse avant est sélectionnée, dans lequel l'ouverture des gaz est complètement fermée, dans lequel la pédale de frein est enfoncée et dans lequel la vitesse du véhicule est sensiblement nulle; un moyen de détection (47) de vitesse de rotation d'entrée pour détecter la vitesse de rotation d'entrée de ladite unité (16) de changement de vitesses; un moyen de détection (51) de vitesse de rotation de sortie pour détecter la vitesse de rotation de sortie de ladite unité (16) de changement de vitesses; un moyen de commande hydraulique (102) pour commander la pression d'huile à envoyer à ladite servocommande hydraulique (C-1); et une unité de commande (41),

dans lequel ladite unité de commande (41) comprend : un moyen de relâchement (103) pour relâcher ledit embrayage (C) en abaissant la pression d'huile à envoyer à ladite servocommande hydraulique (C-1) si ledit état d'arrêt du véhicule est détecté par ledit moyen de détection (101) d'état d'arrêt; et un moyen d'application (104) pour appliquer ledit embrayage (C) en augmentant la pression d'huile à envoyer à ladite servocommande hydraulique (C-1), si ledit état d'arrêt du véhicule n'est pas détecté par ledit moyen de détection (101) d'état d'arrêt pendant que ledit moyen de relâchement (103) est en train de relâcher ledit embrayage (C),

dans lequel ledit moyen d'application (104) comprend : un moyen d'accroissement graduel (105) pour accroître graduellement la pression d'huile à envoyer à ladite servocommande hydraulique (C-1); un premier moyen de décision de satisfaction de condition de fin d'application pour décider si une première condition de fin d'application imposant la fin d'application dudit embrayage (C) est ou non satisfaite, en se basant sur ladite vitesse de rotation d'entrée, sur ladite vitesse de rotation de sortie et sur le rapport d'engrenages d'un étage d'engrenage cible; un moyen de décision de satisfaction de condition d'attente d'application pour décider si une condition d'attente d'application est ou non satisfaite après que ladite première condition de fin d'application a été satisfaite; un deuxième moyen de décision de satisfaction de condition de fin d'application pour décider si une deuxième condition de fin d'application est satisfaite après que ladite condition d'attente d'application a été satisfaite; et un moyen d'accroissement brusque (107) pour accroître brusquement la pression d'huile à envoyer à ladite servocommande hydraulique (C-1), en se basant sur la satisfaction de ladite première condition de fin d'application, de ladite condition d'attente d'application, et de ladite deuxième condition de fin d'application, et

dans lequel ledit moyen d'accroissement brusque (107) accroît brusquement la pression d'huile à envoyer à ladite servocommande hydraulique (C-1), soit lorsque ladite première condition de fin d'application est satisfaite dans le cas où l'ouverture des gaz n'est pas complètement fermée, soit lorsque ladite deuxième condition de fin d'application est satisfaite dans le cas où l'ouverture des gaz est complètement fermée et si ladite condition d'attente d'application est satisfaite avant la fin de l'écoulement d'un premier temps prédéterminé à partir de l'instant de satisfaction de ladite première condition de fin d'application, soit après l'écoulement dudit premier temps prédéterminé à partir de l'instant de satisfaction de ladite première condition de fin d'application dans le cas où l'ouverture des gaz est complètement fermée et si ladite condition d'attente d'application n'est pas satisfaite avant la fin de l'écoulement dudit premier temps prédéterminé à partir de l'instant de satisfaction de ladite première condition de fin d'application.

**4.** Système de commande pour transmission automatique selon la revendication 1, dans lequel ladite condition de fin d'application est satisfaite si, par calcul, ledit embrayage (C) est dans un état se trouvant immédiatement avant la fin de son application.

**5.** Système de commande pour transmission automatique selon la revendication 1 ou 4, dans lequel ledit temps prédéterminé est réglé sur celui au bout duquel l'application dudit embrayage (C) est terminée.

**6.** Système de commande pour transmission automatique selon la revendication 2,

dans lequel ladite condition de fin d'application est satisfaite si, par calcul, ledit embrayage (C) est dans un état se trouvant immédiatement avant la fin de son application, et

dans lequel ladite condition d'attente d'application est satisfaite si, par calcul, ledit embrayage (C) est dans un état se trouvant immédiatement avant le début de son relâchement après que son application soit terminée.

**7.** Système de commande pour transmission automatique selon la revendication 2 ou 6,

dans lequel ledit premier temps prédéterminé est réglé sur celui qui, par calcul, est nécessaire audit embrayage pour être dans un état se trouvant immédiatement après le début de son application après qu'il ait été dans un état se trouvant immédiatement avant la fin de son application, et

dans lequel ledit deuxième temps prédéterminé est réglé sur celui au bout duquel l'application dudit embrayage (C) est terminée.

**8.** Système de commande pour transmission automatique selon la revendication 3, dans lequel ladite première condition de fin d'application est satisfaite si, par calcul, ledit embrayage (C) est dans un état se trouvant immédiatement avant la fin de son application,

dans lequel ladite condition d'attente d'application est satisfaite si, par calcul, ledit embrayage (C) est dans un état se trouvant immédiatement après le début de son relâchement après que son application soit terminée, et dans lequel ladite deuxième condition de fin d'application est satisfaite si, par calcul, ledit embrayage (C) est dans un état se trouvant immédiatement avant la fin de son application après que ladite première condition de fin d'application ait été satisfaite.

**9.** Système de commande pour transmission automatique selon la revendication 3 ou 8,

dans lequel ledit premier temps prédéterminé est réglé sur celui qui, par calcul, est nécessaire audit embrayage pour être dans un état se trouvant immédiatement après le début de son application après qu'il ait été dans un état se trouvant immédiatement avant la fin de son application.

FIG. 1

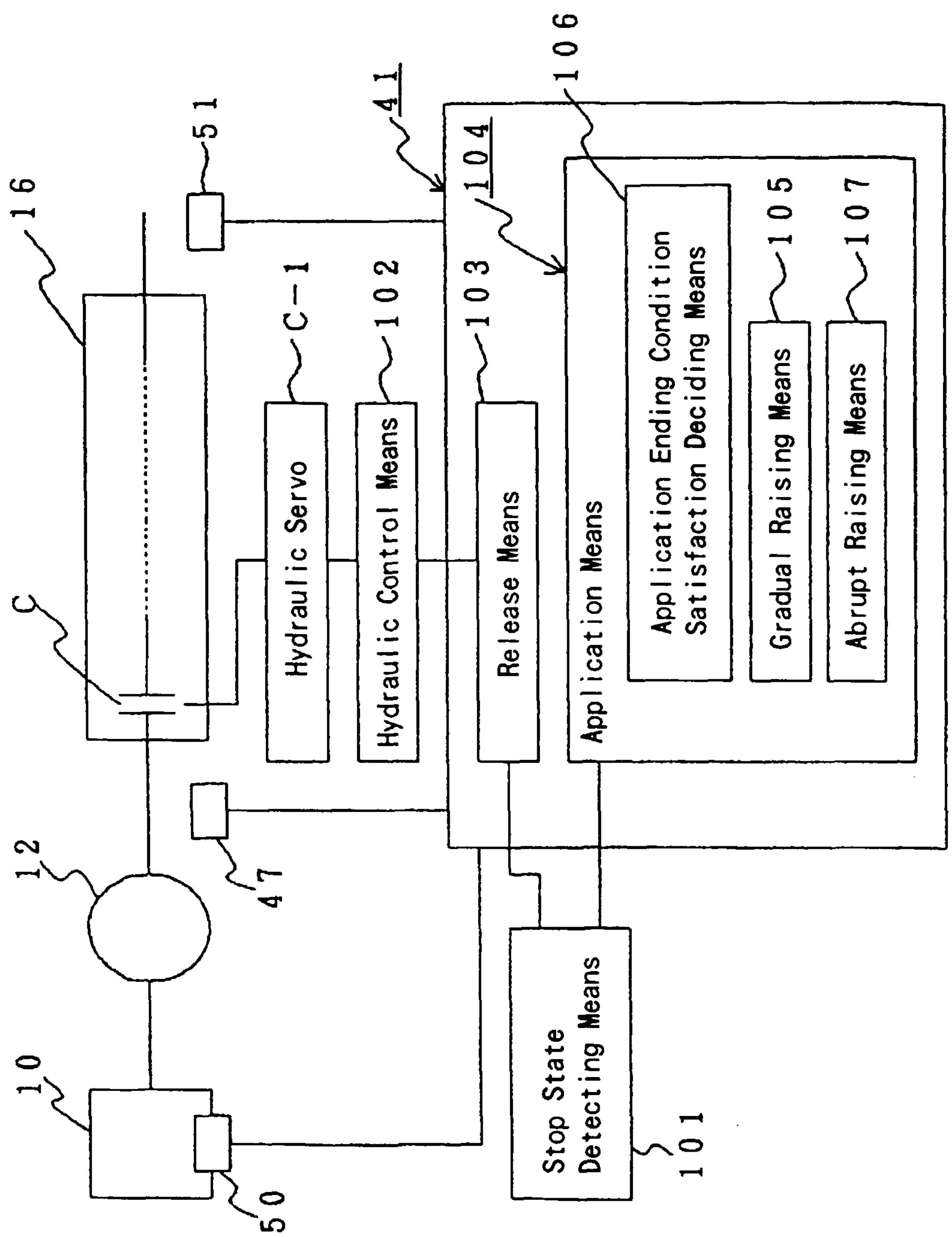
16
C
12
10
50
51
47
41
104
106
105
107
C-1
102
103
101
Hydraulic Servo
Hydraulic Control Means
Release Means
Application Means
Application Ending Condition Satisfaction Deciding Means
Gradual Raising Means
Abrupt Raising Means
Stop State Detecting Means

FIG. 2

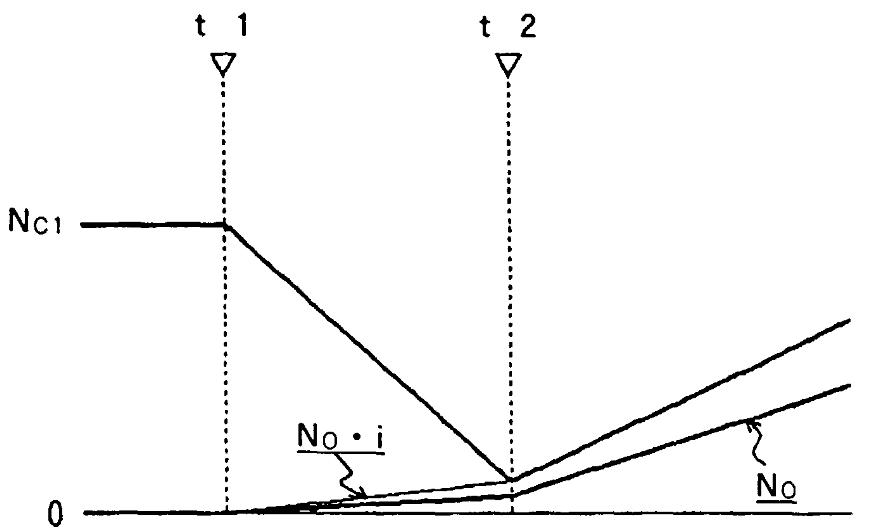

FIG. 3

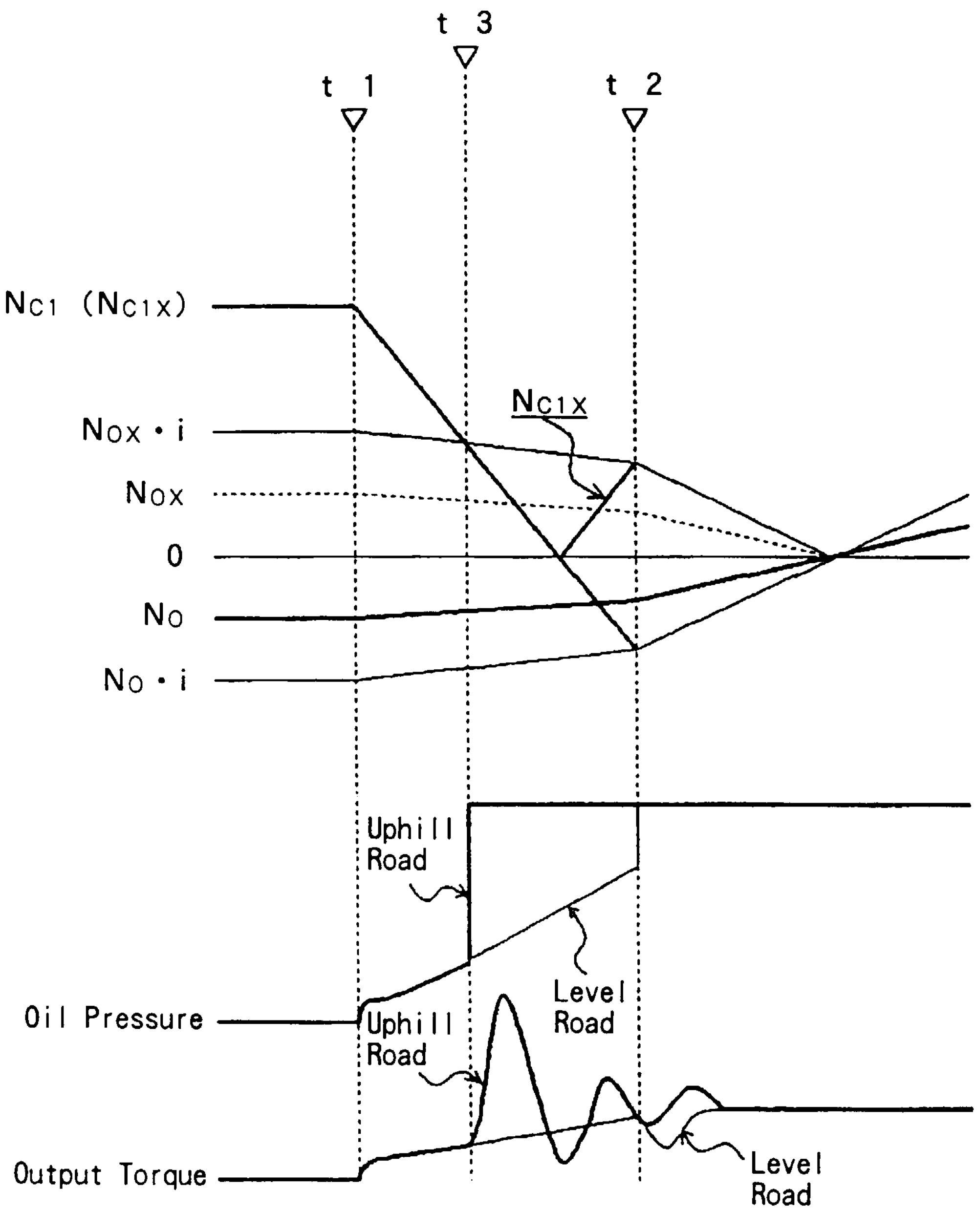
t 3
t 1
t 2
Nc1 (Nc1x)
Nc1x
Nox • i
Nox
0
No
No • i
Uphill Road
Level Road
Oil Pressure
Uphill Road
Output Torque
Level Road

FIG. 4

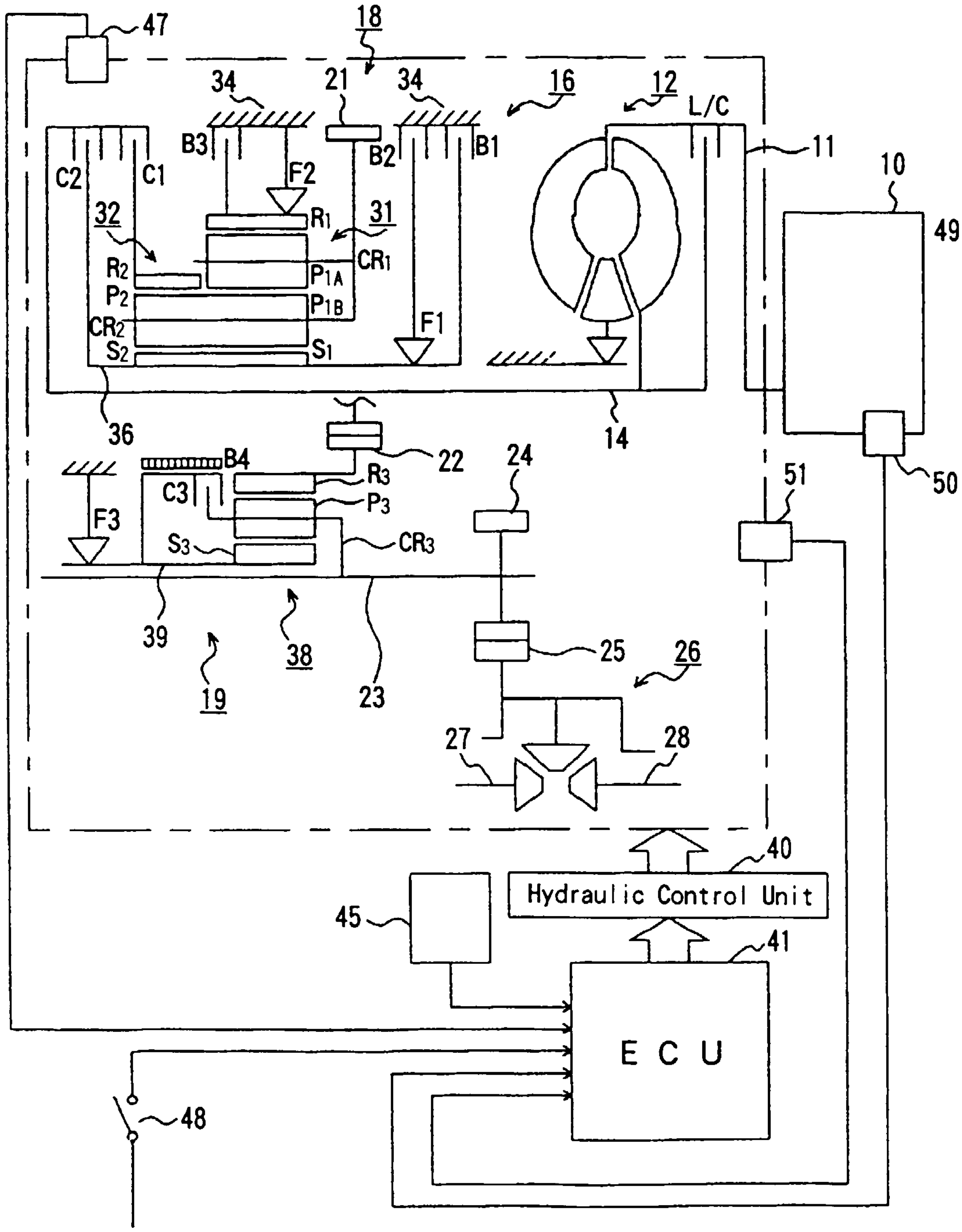
18
47
34
21
34
16
12
L/C
B3
B2
B1
11
10
C2
C1
F2
32
R1
31
49
CR1
R2
P1A
P2
P1B
CR2
F1
S2
S1
36
14
22
24
B4
R3
51
50
C3
P3
F3
S3
CR3
39
38
23
19
25
26
27
28
40
Hydraulic Control Unit
45
41
E C U
48

# FIG. 5

| | | Clutch | | | Brake | | | | One-way Clutch | | |
|---|---|---|---|---|---|---|---|---|---|---|---|
| | | C1 | C2 | C3 | B1 | B2 | B3 | B4 | F1 | F2 | F3 |
| R | | × | ○ | × | × | × | ○ | ○ | × | × | × |
| N | | × | × | × | × | × | × | ○ | × | × | × |
| D | 1 ST | ○ | × | × | × | × | (○) | ○ | × | ○ | ○ |
| | 2 ND | ○ | × | × | ○ | ○ | × | ○ | ○ | × | ○ |
| | 3 RD | ○ | × | ○ | ○ | ○ | × | × | ○ | × | × |
| | 4 TH | ○ | ○ | ○ | × | ○ | × | × | × | × | × |

FIG. 6

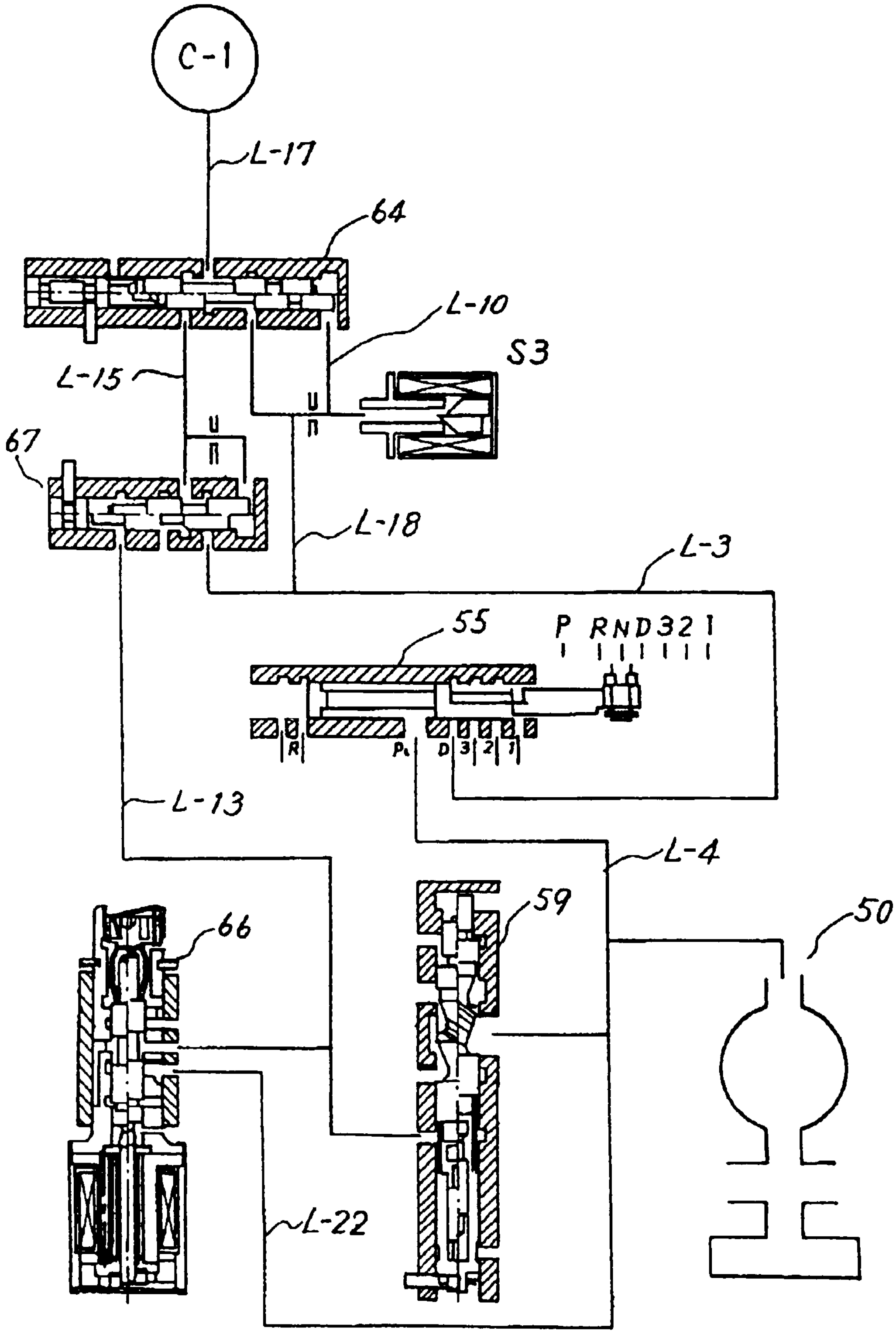
C-1
L-17
64
L-10
S3
L-15
67
L-18
L-3
55
P RNDD321
R
P
D 3 2 1
L-13
L-4
59
50
66
L-22

FIG. 7

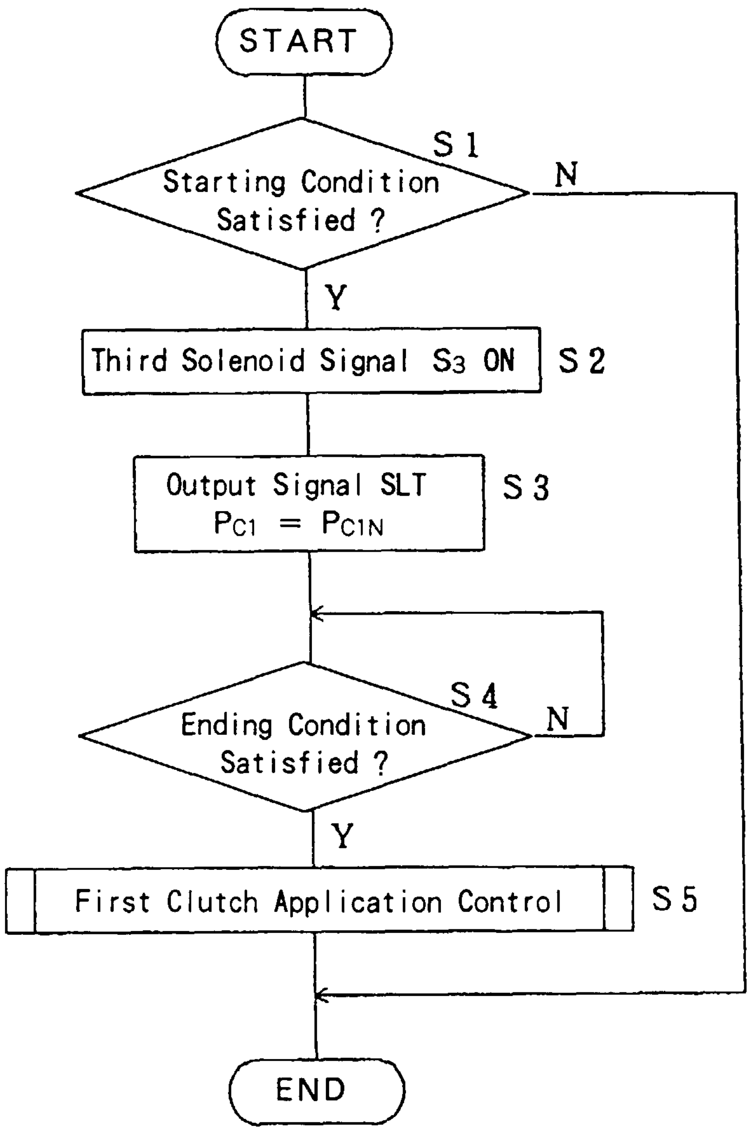
START
S1
Starting Condition Satisfied ?
N
Y
Third Solenoid Signal S3 ON
S2
Output Signal SLT
PC1 = PC1N
S3
S4
Ending Condition Satisfied ?
N
Y
First Clutch Application Control
S5
END

FIG. 8

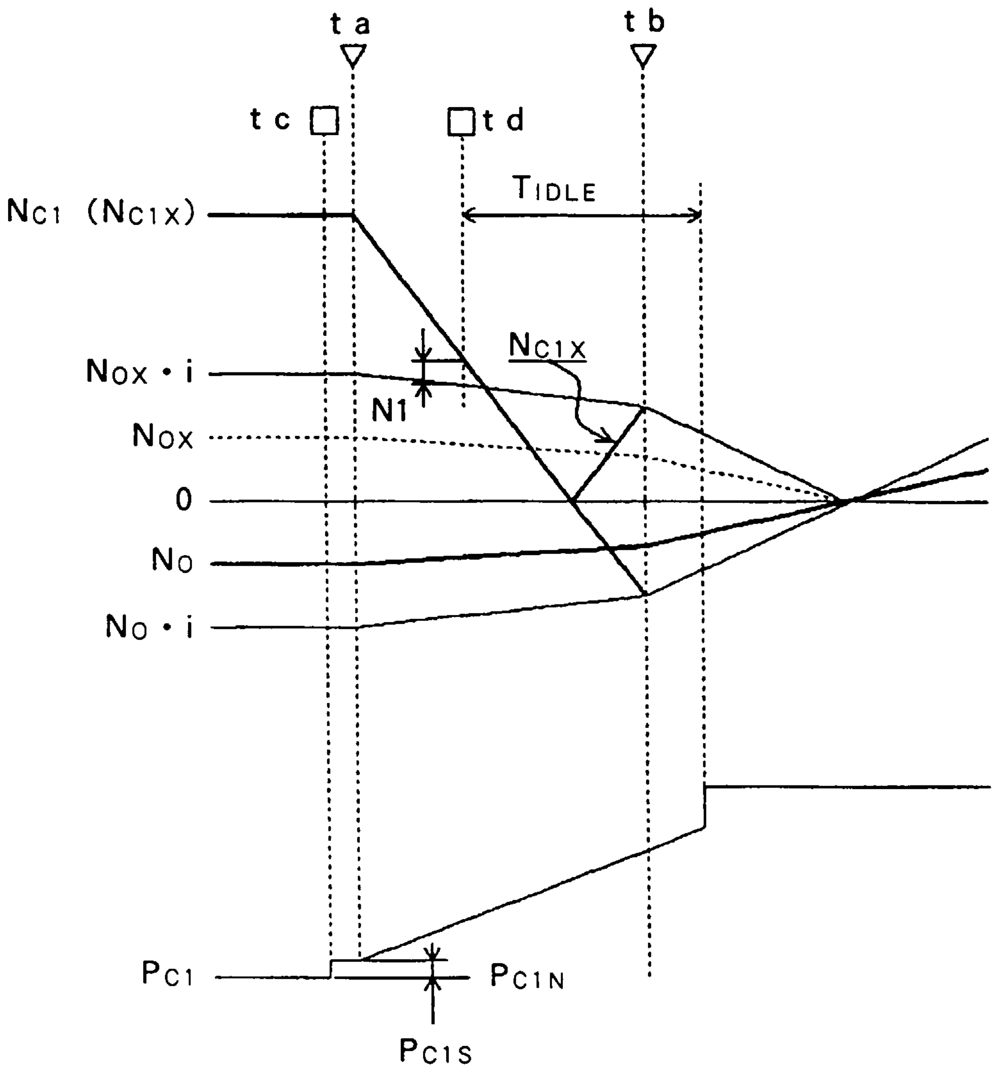

t a
t b
t c
t d
TIDLE
NC1 (NC1X)
NC1X
NOX • i
N1
NOX
0
NO
NO • i
PC1
PC1N
PC1S

FIG. 9

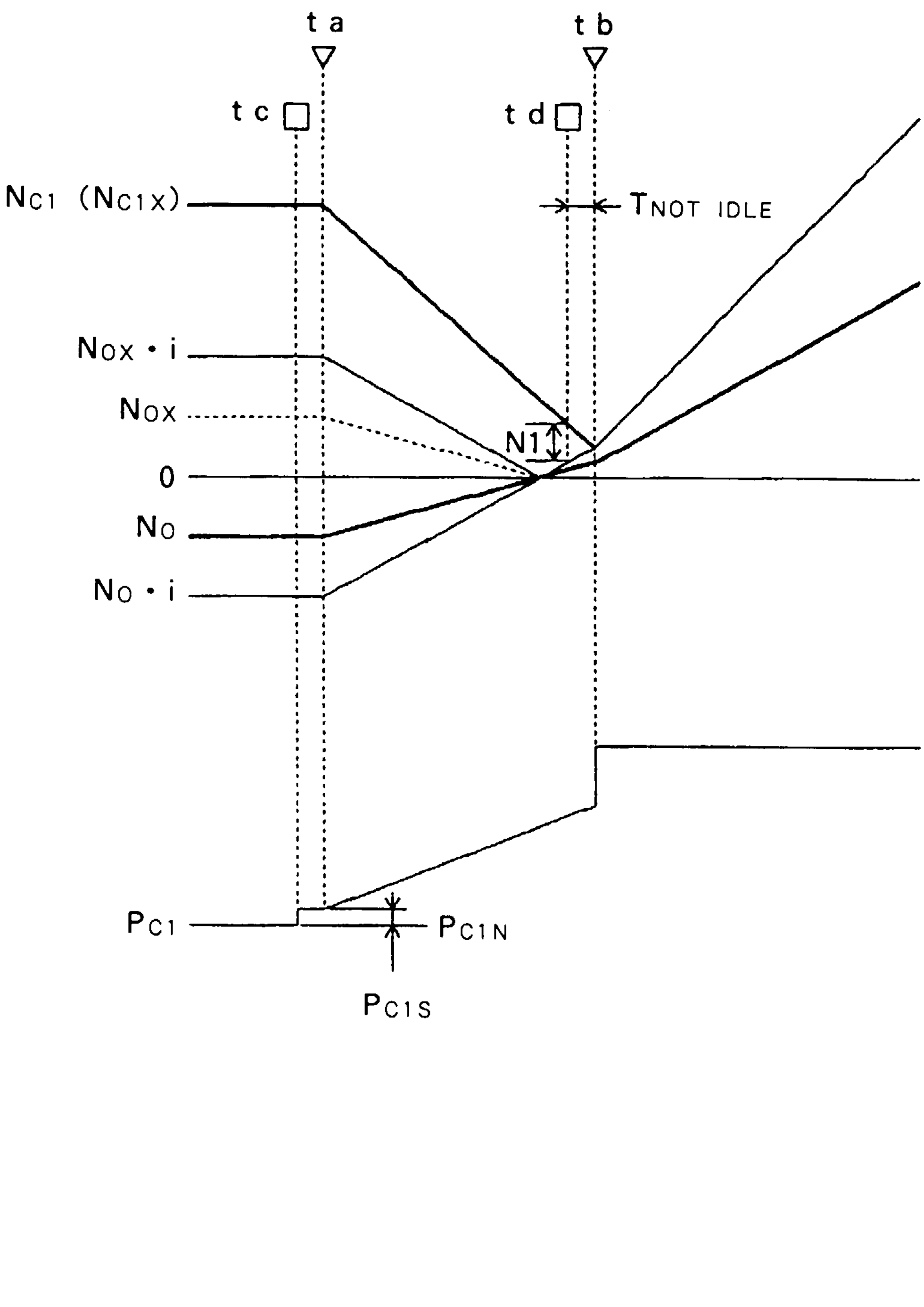

FIG. 10

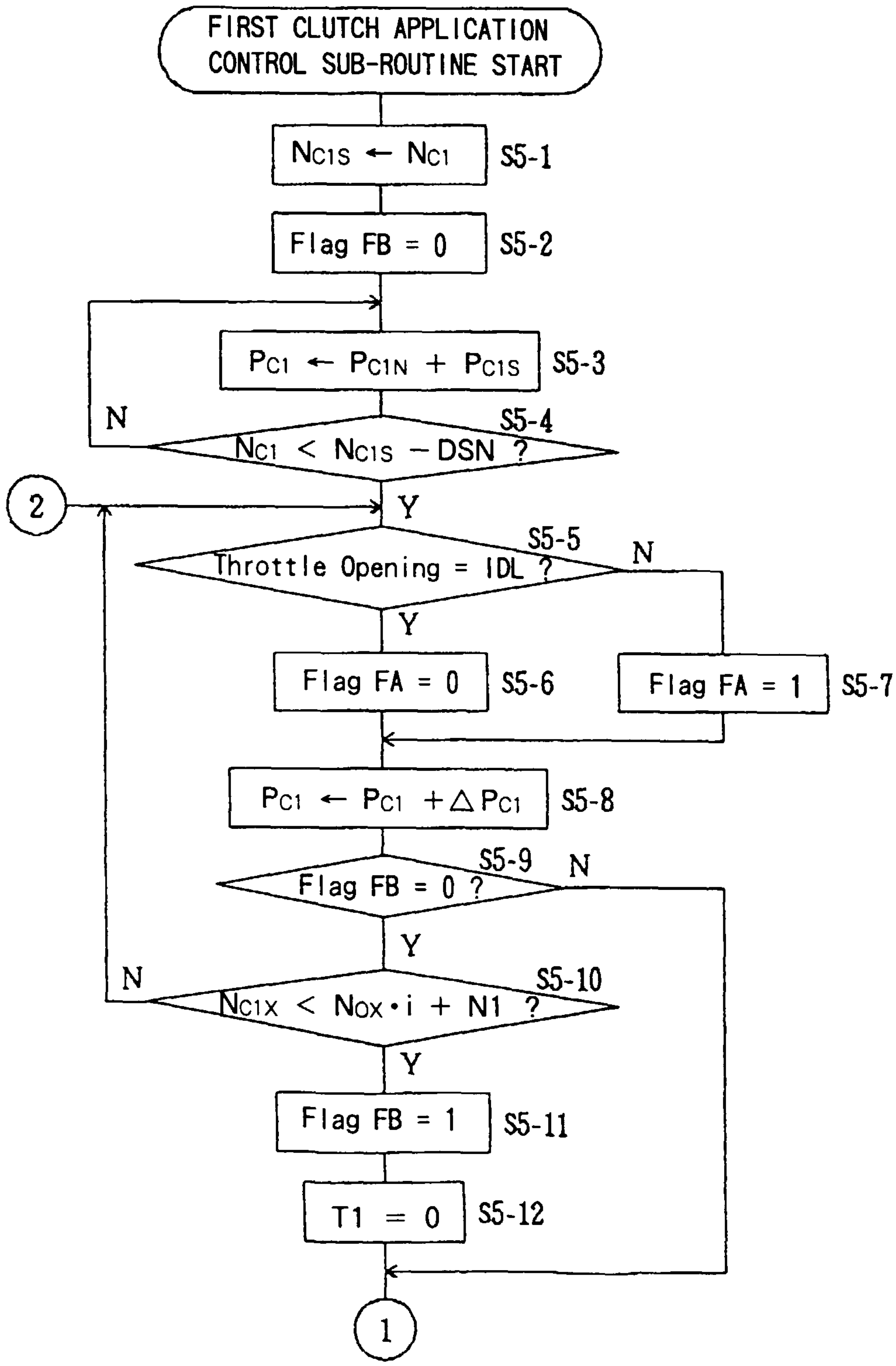
FIRST CLUTCH APPLICATION CONTROL SUB-ROUTINE START
NC1S ← NC1
S5-1
Flag FB = 0
S5-2
PC1 ← PC1N + PC1S
S5-3
S5-4
NC1 < NC1S − DSN ?
N
Y
2
S5-5
Throttle Opening = IDL ?
N
Y
Flag FA = 0
S5-6
Flag FA = 1
S5-7
PC1 ← PC1 +△PC1
S5-8
S5-9
Flag FB = 0 ?
N
Y
S5-10
NC1X < NOX・i + N1 ?
N
Y
Flag FB = 1
S5-11
T1 = 0
S5-12
1

FIG. 11

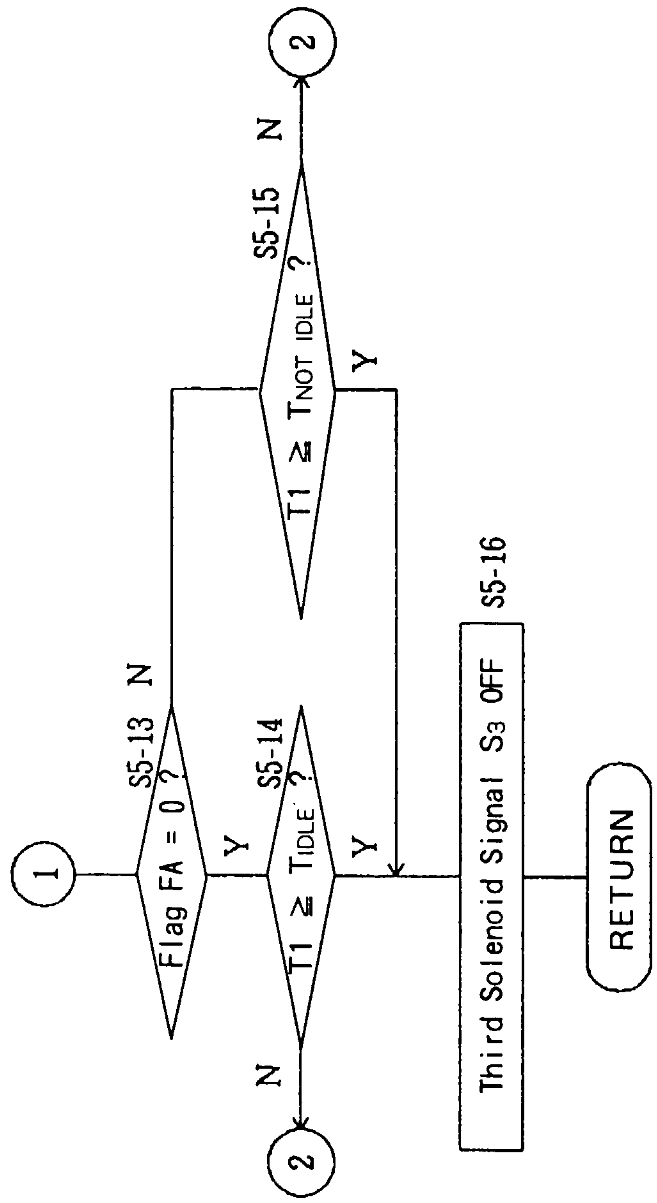
1
S5-13
Flag FA = 0 ?
Y
N
S5-14
T1 ≧ TIDLE' ?
Y
N
2
S5-15
T1 ≧ TNOT IDLE ?
Y
N
2
S5-16
Third Solenoid Signal S3 OFF
RETURN

FIG. 12

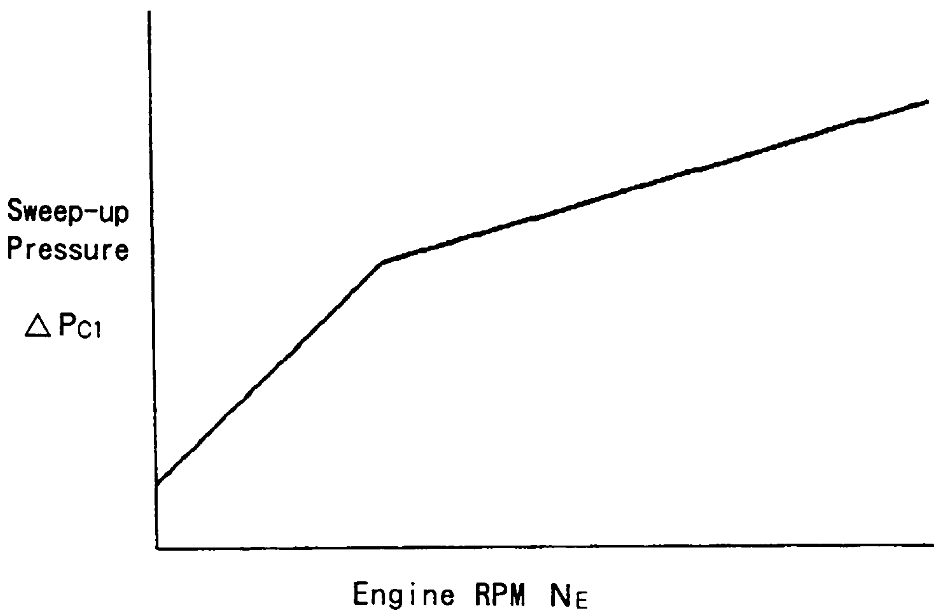

FIG. 13

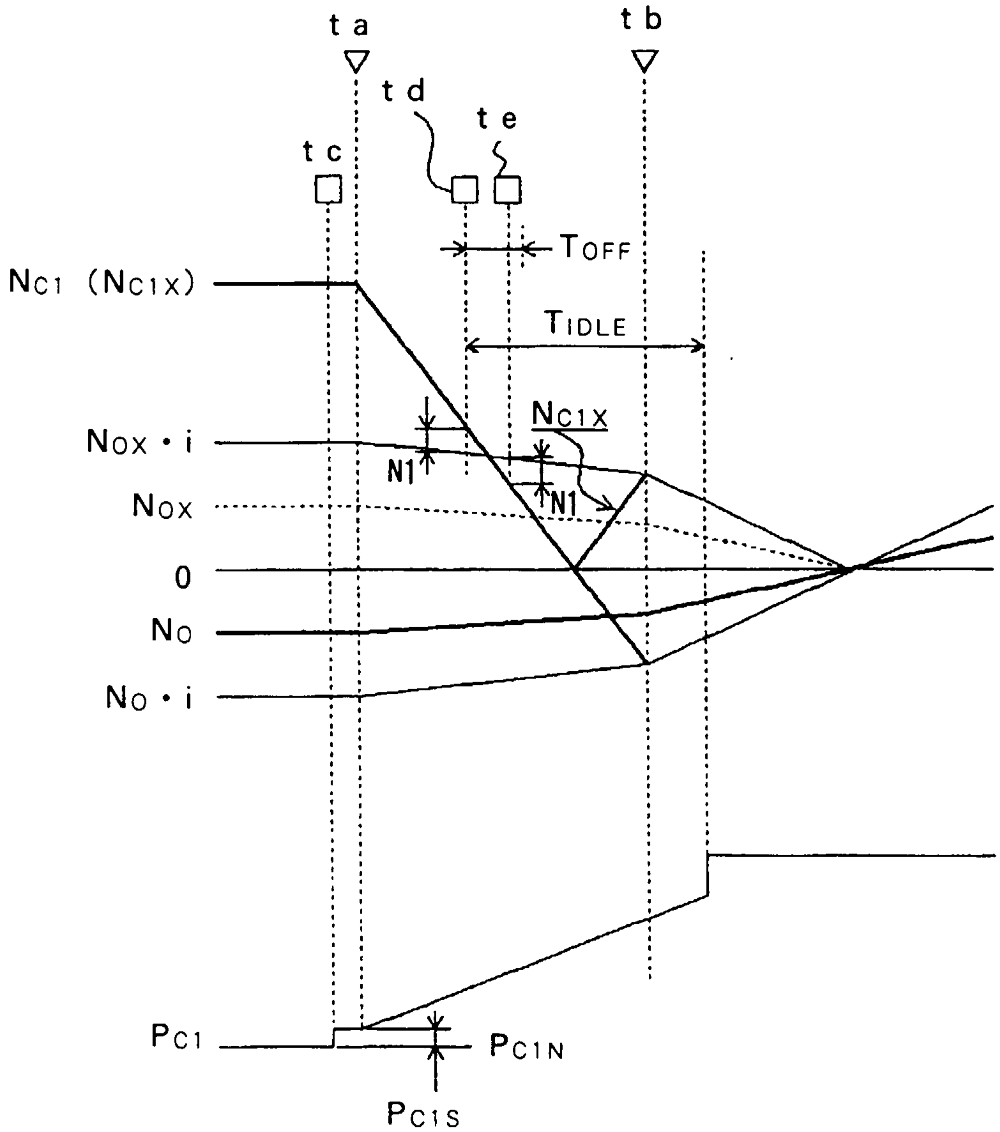
t a
t b
t d
t e
t c
T OFF
N C1 (N C1X)
T IDLE
N C1X
N OX · i
N1
N1
N OX
0
N O
N O · i
P C1
P C1N
P C1S

FIG. 14

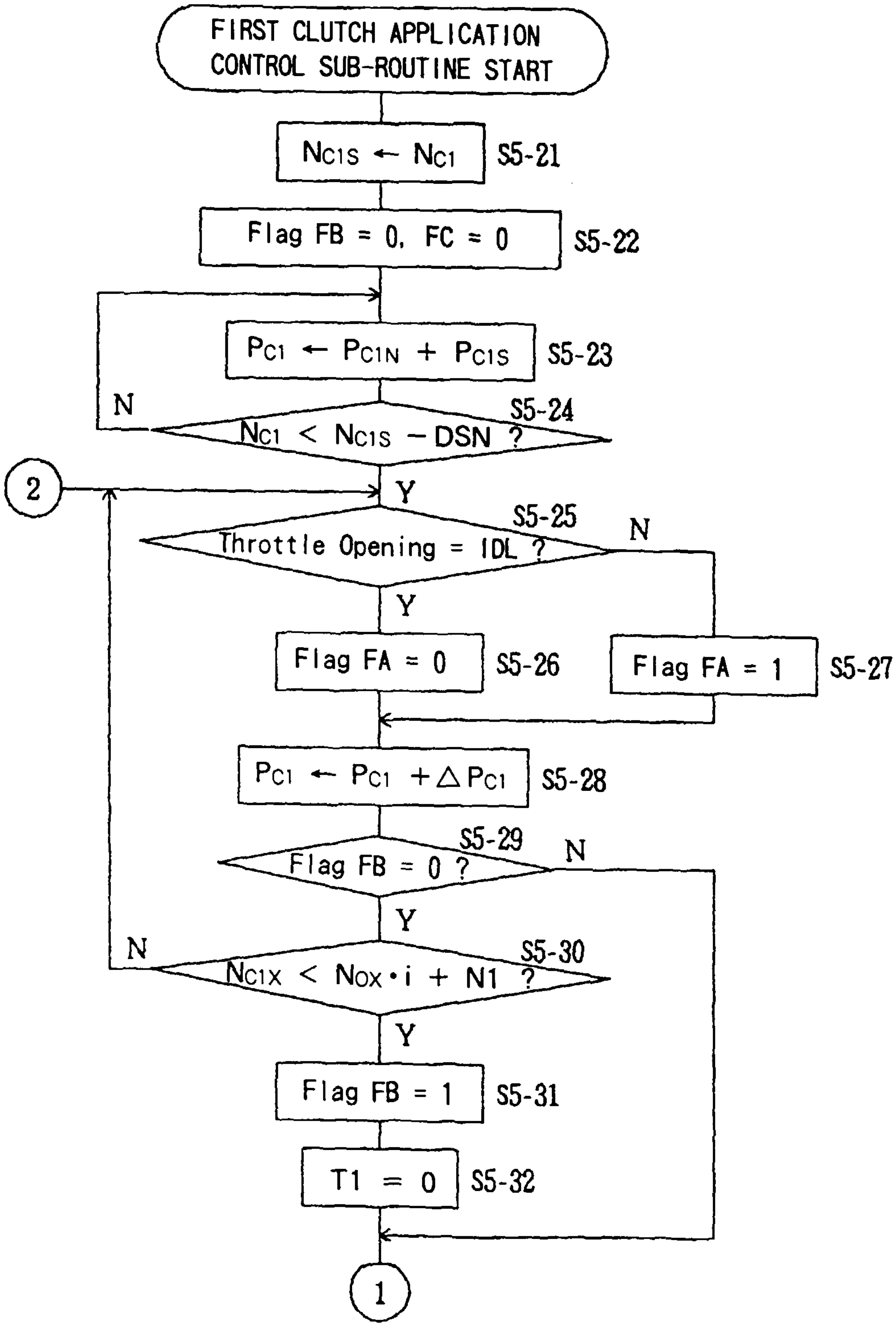
FIRST CLUTCH APPLICATION CONTROL SUB-ROUTINE START
NC1S ← NC1
S5-21
Flag FB = 0, FC = 0
S5-22
PC1 ← PC1N + PC1S
S5-23
NC1 < NC1S − DSN ?
S5-24
N
Y
2
Throttle Opening = IDL ?
S5-25
N
Y
Flag FA = 0
S5-26
Flag FA = 1
S5-27
PC1 ← PC1 + △PC1
S5-28
Flag FB = 0 ?
S5-29
N
Y
NC1X < NOX・i + N1 ?
S5-30
N
Y
Flag FB = 1
S5-31
T1 = 0
S5-32
1

FIG. 15

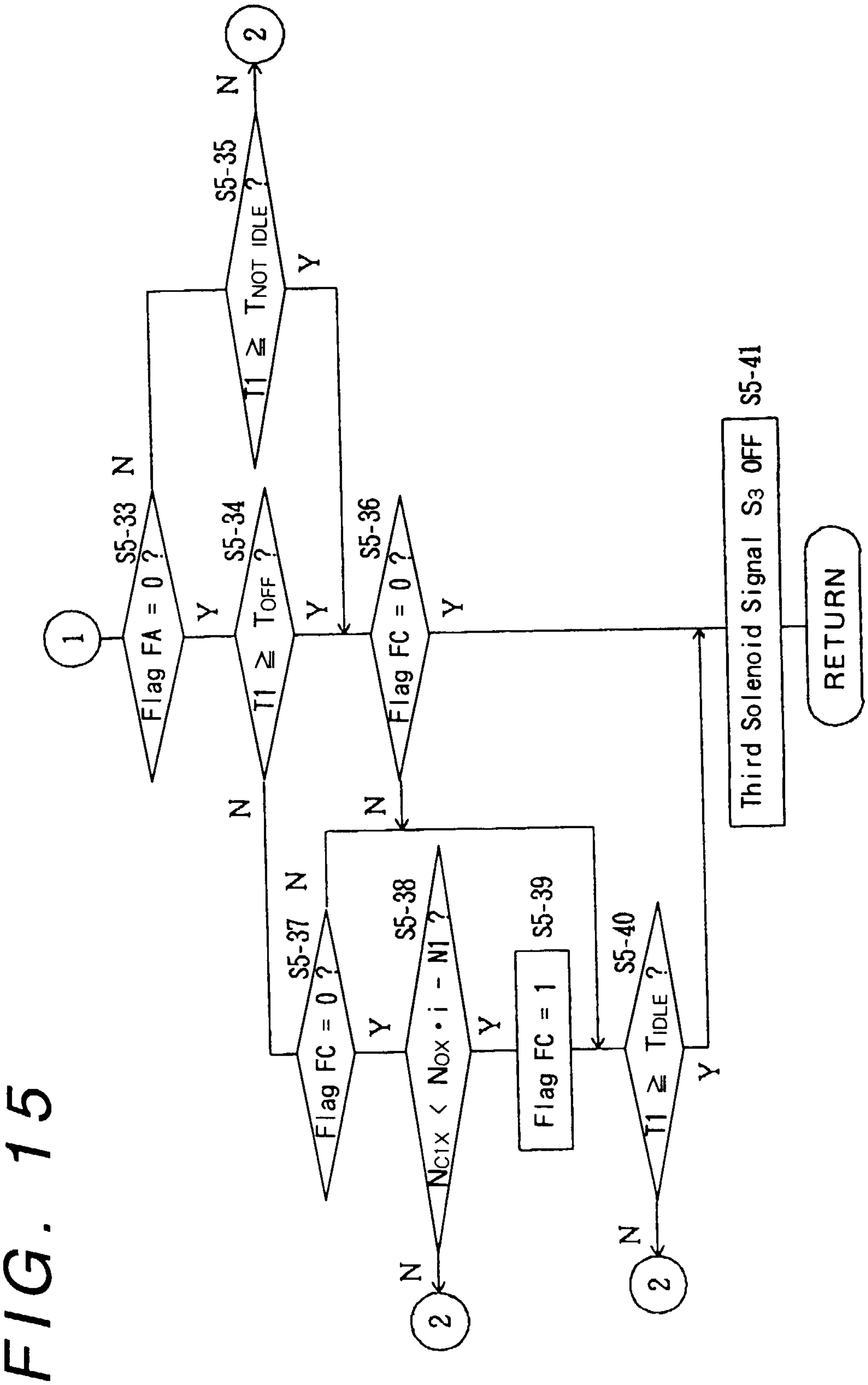
1
Flag FA = 0 ?
S5-33
N
Y
T1 ≧ TOFF ?
S5-34
Y
N
T1 ≧ TNOT IDLE ?
S5-35
Y
N
2
Flag FC = 0 ?
S5-36
Y
N
Flag FC = 0 ?
S5-37
Y
N
NC1X < NOX • i - N1 ?
S5-38
Y
N
2
Flag FC = 1
S5-39
T1 ≧ TIDLE ?
S5-40
Y
N
2
Third Solenoid Signal S3 OFF
S5-41
RETURN

FIG. 16

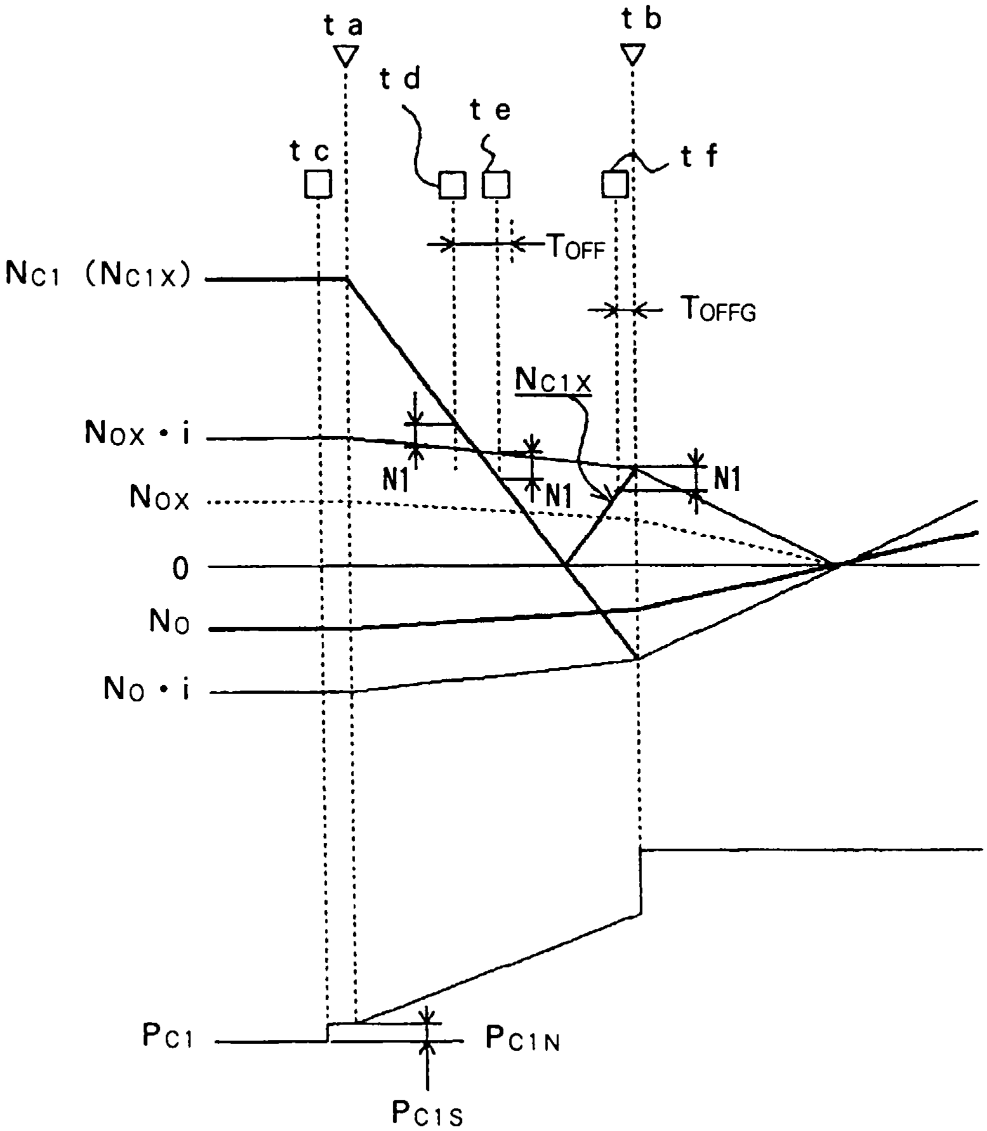
t a
t b
t d
t e
t c
t f
$T_{OFF}$
$N_{C1}$ ($N_{C1X}$)
$T_{OFFG}$
$N_{C1X}$
$N_{OX}$ • i
N1
N1
N1
$N_{OX}$
0
$N_O$
$N_O$ • i
$P_{C1}$
$P_{C1N}$
$P_{C1S}$

FIG. 17

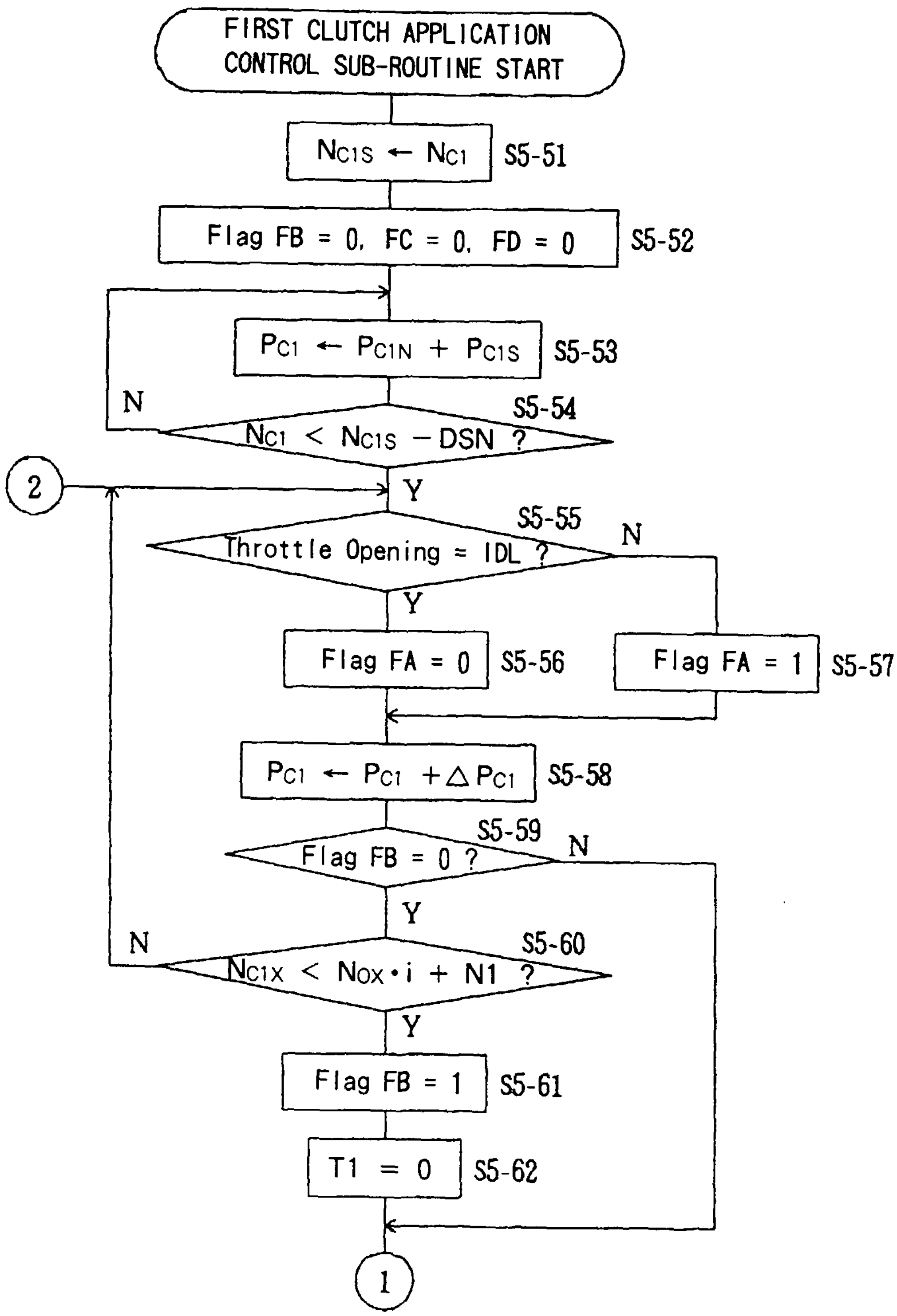
FIRST CLUTCH APPLICATION CONTROL SUB-ROUTINE START
NC1S ← NC1
S5-51
Flag FB = 0, FC = 0, FD = 0
S5-52
PC1 ← PC1N + PC1S
S5-53
N
S5-54
NC1 < NC1S − DSN ?
2
Y
S5-55
N
Throttle Opening = IDL ?
Y
Flag FA = 0
S5-56
Flag FA = 1
S5-57
PC1 ← PC1 + △PC1
S5-58
S5-59
N
Flag FB = 0 ?
Y
N
S5-60
NC1X < NOX•i + N1 ?
Y
Flag FB = 1
S5-61
T1 = 0
S5-62
1

FIG. 18

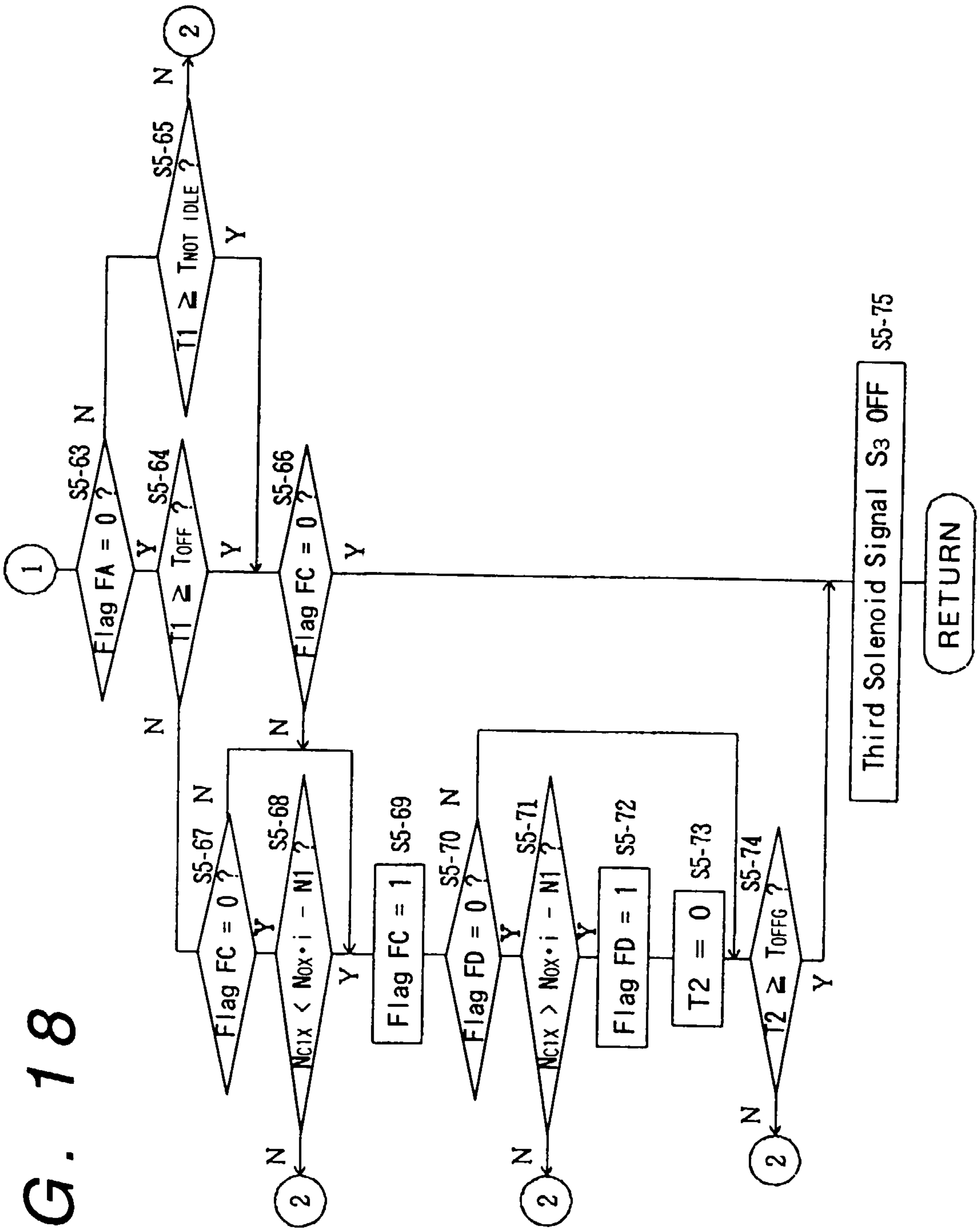

Flag FA = 0 ?
S5-63
T1 ≧ TOFF ?
S5-64
T1 ≧ TNOT IDLE ?
S5-65
Flag FC = 0 ?
S5-66
Flag FC = 0 ?
S5-67
NC1X < NOX・i − N1 ?
S5-68
Flag FC = 1
S5-69
Flag FD = 0 ?
S5-70
NC1X > NOX・i − N1 ?
S5-71
Flag FD = 1
S5-72
T2 = 0
S5-73
T2 ≧ TOFFG ?
S5-74
Third Solenoid Signal S3 OFF
S5-75
RETURN